(19) Europäisches Patentamt
European Patent Office
Office européen des brevets

(11) **EP 4 391 096 A2**

(12) **EUROPEAN PATENT APPLICATION**

(43) Date of publication:
**26.06.2024 Bulletin 2024/26**

(21) Application number: **23209735.2**

(22) Date of filing: **14.11.2023**

(51) International Patent Classification (IPC):
**H01M 4/02** (2006.01)    **H01M 4/04** (2006.01)
**H01M 4/66** (2006.01)

(52) Cooperative Patent Classification (CPC):
**H01M 4/668; H01M 4/0404; H01M 4/0409;**
**H01M 4/0411; H01M 4/0483; H01M 4/661;**
**H01M 4/663; H01M 4/666; H01M 4/667;**
H01M 2004/027; H01M 2004/028; H01M 2004/029

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **20.12.2022 JP 2022202996**

(71) Applicant: **TOYOTA JIDOSHA KABUSHIKI KAISHA**
**Toyota-shi, Aichi-ken, 471-8571 (JP)**

(72) Inventor: **UEZONO, Tomoyuki**
**Toyota-shi, 471-8571 (JP)**

(74) Representative: **D Young & Co LLP**
**3 Noble Street**
**London EC2V 7BQ (GB)**

(54) **ELECTRODE CURRENT COLLECTOR, BIPOLAR BATTERY, ALL SOLID STATE BATTERY, AND METHOD OF PRODUCING ELECTRODE CURRENT COLLECTOR**

(57)    An electrode current collector (10) comprises a metal foil (11), an electrically-conductive resin layer (12), and a carbon particle layer (13a) in this order. The electrically-conductive resin layer (12) includes a contiguous phase and a dispersed phase. The contiguous phase includes a resin material. The dispersed phase includes electrically-conductive particles. The carbon particle layer (13a) includes electrically-conductive carbon particles.

FIG.1

**Description**

CROSS REFERENCE TO RELATED APPLICATIONS

This nonprovisional application is based on Japanese Patent Application No. 2022-202996 filed on December 20, 2022, with the Japan Patent Office, the entire contents of which are hereby incorporated by reference.

BACKGROUND OF THE DISCLOSURE

Field

The present disclosure relates to an electrode current collector, a bipolar battery, an all-solid-state battery, and a method of producing an electrode current collector.

Description of the Background Art

Japanese Patent Laying-Open No. 2019-106282 discloses a resin current collector.

SUMMARY OF THE DISCLOSURE

Conventionally, as an electrode current collector, a metal foil is used. From the viewpoints of material cost reduction, mass energy density, and the like, for example, reduction of metal usage is demanded. For example, as an alternative to the metal foil, a resin current collector is suggested. However, with the metal foil replaced by a resin current collector, battery resistance tends to increase.

An object of the present disclosure is to provide an electrode current collector with reduced metal usage.

Hereinafter, the technical configuration and effects of the present disclosure will be described. It should be noted that the action mechanism according to the present specification includes presumption. The action mechanism does not limit the technical scope of the present disclosure.

1. An electrode current collector comprises a metal foil, an electrically-conductive resin layer, and a carbon particle layer in this order. The electrically-conductive resin layer includes a contiguous phase and a dispersed phase. The contiguous phase includes a resin material. The dispersed phase includes electrically-conductive particles. The carbon particle layer includes electrically-conductive carbon particles.

When a part of the metal foil is replaced by the electrically-conductive resin layer, metal usage is expected to be reduced. The electrically-conductive resin layer includes a contiguous phase (a resin material) and a dispersed phase (electrically-conductive particles). The electrically-conductive resin layer may be sufficiently electrically conductive in a thickness direction. However, according to a novel finding of the present disclosure, there is significant in-plane variations of resistance on the surface of the electrically-conductive resin layer, and, because of this, electrode reactions can occur nonuniformly. Nonuniform electrode reactions can contribute to an increased battery resistance.

In the present disclosure, the carbon particle layer covers the electrically-conductive resin layer. It is expected that electrons can be distributed uniformly in the carbon particle layer. This is expected to reduce in-plane resistance variations to a significant extent.

2. In the electrode current collector according to "1" above, the metal foil may be an aluminum foil. The resin material may be an olefin-based resin.

3. In the electrode current collector according to "1" or "2" above, the metal foil may have a thickness from 20 to 40 $\mu$m, for example. The electrically-conductive resin layer may have a thickness from 5 to 20 $\mu$m, for example. The carbon particle layer may have a thickness from 0.5 to 5 $\mu$m, for example.

4. In the electrode current collector according to any one of "1" to "3" above, the electrically-conductive resin layer may include the electrically-conductive particles in a mass fraction from 5 to 30%, with the remainder being made up of the resin material. The carbon particle layer may include the electrically-conductive carbon particles in a mass fraction of 50% or more.

5. In the electrode current collector according to any one of "1" to "4" above, the electrically-conductive particles may include at least one selected from the group consisting of electrically-conductive carbon particles and metal particles.

6. In the electrode current collector according to any one of "1" to "5" above, the electrically-conductive particles may include at least one selected from the group consisting of acetylene black, furnace black, graphite, vapor grown carbon fibers, carbon nanotubes, carbon nanofibers, carbon nanospheres, nickel particles, tin particles, copper particles, nickel-tin alloy particles, copper-tin alloy particles, and copper-nickel alloy particles.

7. In the electrode current collector according to any one of "1" to "6" above, results of current mapping of a surface of the carbon particle layer measured with a scanning probe microscope may have a standard deviation of 0.3 nA or less. The results of current mapping are measured in a square measurement region of 80 $\mu$m $\times$ 80 $\mu$m at an applied voltage of 10 V.

The in-plane resistance variations may be evaluated with a scanning probe microscope (SPM). With the SPM, current mapping is measured. The smaller the variations (standard deviation) in current are, the smaller the in-plane resistance variations are considered to be. The carbon particle layer may have a standard deviation of 0.3 nA or less. On the other hand, the electrically-conductive resin layer may have a standard deviation more than 1 nA.

8. A bipolar battery comprises the electrode current collector according to any one of "1 " to "7" above.

Conventionally, as an electrode current collector for a bipolar battery, a clad foil is used. A clad foil may be formed by bonding an Al foil and a Cu foil to each other. The Al foil may correspond to a positive electrode. The Cu foil may correspond to a negative electrode.

The electrode current collector according to "1" above is suitable for a bipolar battery. This is because the electrically-conductive resin layer may serve as an alternative to a Cu foil. The electrically-conductive resin layer may interrupt permeation of a liquid electrolyte (an electrolyte solution) from the negative electrode side. Because the electrically-conductive resin layer protects the metal foil from the negative electrode, inconvenient reactions may be inhibited from proceeding. As the inconvenient reactions, alloy formation between the metal foil and Li can be considered, for example. When a Cu foil is replaced by the electrically-conductive resin layer, metal usage may be reduced.

9. An all-solid-state battery comprises the electrode current collector according to any one of "1" to "7" above.

The electrode current collector according to "1" above is also suitable for an all-solid-state battery. The all-solid-state battery may be a bipolar battery, or may be a monopolar battery. A monopolar battery may also be called a unipolar battery.

10. A method of producing an electrode current collector comprises the following (a) to (c) in this order:

(a) forming a resin composition by mixing a resin material and electrically-conductive particles;
(b) directly laminating the resin composition in molten form on a metal foil by an extrusion lamination method to form an electrically-conductive resin layer; and
(c) forming a carbon particle layer by applying electrically-conductive carbon particles to the electrically-conductive resin layer.

Conventionally, with the use of an electrically-conductive adhesive, for example, an Al foil and a Cu foil are adhered to each other to produce a clad foil. In the production method according to "10" above, the electrically-conductive resin layer may be directly laminated on the metal foil. That is, the electrically-conductive adhesive may be omitted.

Next, an embodiment of the present disclosure (which may also be simply called "the present embodiment" hereinafter) and an example of the present disclosure (which may also be simply called "the present example" hereinafter) will be described. It should be noted that neither the present embodiment nor the present example limits the technical scope of the present disclosure. The present embodiment and the present example are illustrative in any respect. The present embodiment and the present example are non-restrictive. The technical scope of the present disclosure encompasses any modifications within the meaning and the scope equivalent to the terms of the claims. For example, it is originally planned that certain configurations of the present embodiment and the present example can be optionally combined.

The foregoing and other objects, features, aspects and advantages of the present disclosure will become more apparent from the following detailed description of the present disclosure when taken in conjunction with the accompanying drawings.

BRIEF DESCRIPTION OF THE DRAWINGS

Fig. 1 is a conceptual view illustrating an electrode current collector according to the present embodiment.
Fig. 2 is Table 1 showing results of evaluation of electrically-conductive particles.
Fig. 3 is a schematic flowchart illustrating a method of producing an electrode current collector according to the present embodiment.
Fig. 4 is a conceptual view illustrating a bipolar battery according to the present embodiment.
Fig. 5 is Table 2 showing a first battery configuration.
Fig. 6 is Table 3 showing a second battery configuration.
Fig. 7 is Table 4 showing a third battery configuration.
Fig. 8 is a conceptual view illustrating an all-solid-state battery according to the present embodiment.

Fig. 9 is a conceptual view illustrating a first cell.
Fig. 10 is a conceptual view illustrating a second cell.
Fig. 11 is a conceptual view illustrating a third cell.
Fig. 12 is Table 5 showing results of evaluation of electrode current collectors.

DESCRIPTION OF THE PREFERRED EMBODIMENTS

1. Terms and Definitions, etc.

Expressions such as "comprise", "include", and "have", and other similar expressions (such as "be composed of", for example) are open-ended expressions. In an open-ended expression, in addition to an essential component, an additional component may or may not be further included. The expression "consist of" is a closed-end expression. However, even when a closed-end expression is used, impurities present under ordinary circumstances as well as an additional element irrelevant to the technique according to the present disclosure are not excluded. The expression "consist essentially of" is a semiclosed-end expression. A semiclosed-end expression tolerates addition of an element that does not substantially affect the fundamental, novel features of the technique according to the present disclosure.

Expressions such as "may" and "can" are not intended to mean "must" (obligation) but rather mean "there is a possibility" (tolerance).

Regarding a plurality of steps, operations, processes, and the like that are included in various methods, the order for implementing those things is not limited to the described order, unless otherwise specified. For example, a plurality of steps may proceed simultaneously. For example, a plurality of steps may be implemented in reverse order.

"At least one of A and B" includes "A or B" and "A and B". "At least one of A and B" may also be expressed as "A and/or B".

A singular form also includes its plural meaning, unless otherwise specified. For example, "a particle" may mean not only "one particle" but also "a plurality of particles (a particle group)" and "a group of particles (powder)".

Any geometric term (such as "parallel", "vertical", and "orthogonal", for example) should not be interpreted solely in its exact meaning. For example, "parallel" may mean a geometric state that is deviated, to some extent, from exact "parallel". Any geometric term herein may include tolerances and/or errors in terms of design, operation, production, and/or the like. The dimensional relationship in each figure may not necessarily coincide with the actual dimensional relationship. The dimensional relationship (in length, width, thickness, and the like) in each figure may have been changed for the purpose of assisting understanding for the readers. Further, a part of a given configuration may have been omitted.

A numerical range such as "from m to n%" includes both the upper limit and the lower limit, unless otherwise specified. That is, "from m to n%" means a numerical range of "not less than m% and not more than n%". Moreover, "not less than m% and not more than n%" includes "more than m% and less than n%". Further, any numerical value selected from a certain numerical range may be used as a new upper limit or a new lower limit. For example, any numerical value from a certain numerical range may be combined with any numerical value described in another location of the present specification or in a table or a drawing to set a new numerical range.

All the numerical values are regarded as being modified by the term "about". The term "about" may mean $\pm 5\%$, $\pm 3\%$, $\pm 1\%$, and/or the like, for example. Each numerical value may be an approximate value that can vary depending on the implementation configuration of the technique according to the present disclosure. Each numerical value may be expressed in significant figures. Unless otherwise specified, each measured value may be the average value obtained from multiple measurements performed. The number of measurements may be 3 or more, or may be 5 or more, or may be 10 or more. Generally, the greater the number of measurements is, the more reliable the average value is expected to be. Each measured value may be rounded off based on the number of the significant figures. Each measured value may include an error occurring due to an identification limit of the measurement apparatus, for example.

A stoichiometric composition formula represents a typical example of a compound. A compound may have a non-stoichiometric composition. For example, "$Al_2O_3$" is not limited to a compound where the ratio of the amount of substance (molar ratio) is "Al/O=2/3". "$Al_2O_3$" represents a compound that includes Al and O in any composition ratio, unless otherwise specified. Further, the compound may be doped with a trace element, or some of Al and/or O may be replaced by another element, for example.

"Derivative" refers to a compound that is derived from its original compound by at least one partial modification selected from the group consisting of substituent introduction, atom replacement, oxidation, reduction, and other chemical reactions. The position of modification may be one position, or may be a plurality of positions. "Substituent" may include, for example, at least one selected from the group consisting of alkyl group, alkenyl group, alkynyl group, cycloalkyl group, unsaturated cycloalkyl group, aromatic group, heterocyclic group, halogen atom (F, Cl, Br, I, etc.), OH group, SH group, CN group, SCN group, OCN group, nitro group, alkoxy group, unsaturated alkoxy group, amino group, alkylamino group, dialkylamino group, aryloxy group, acyl group, alkoxycarbonyl group, acyloxy group, aryloxycarbonyl group, acylamino group, alkoxycarbonylamino group, aryloxy carbonylamino group, sulfonylamino group, sulfamoyl group, carbamoyl group, alkylthio group, arylthio group, sulfonyl group, sulfinyl group, ureido group, phosphoramide group, sulfo group, carboxy group, hydroxamic acid group, sulfino group, hydrazino group, imino group, silyl group, and the like. These substituents may be further substituted. When there are two or more substituents, these substituents may be the same as one another or may be different from each other. A plurality of substituents may be bonded together to form a ring. A derivative of a polymer compound (a resin material) may also be called "a modified product".

"Copolymer" includes at least one selected from the group consisting of unspecified-type, statistical-type, random-type, alternating-type, periodic-type, block-type, and graft-type.

"D50" refers to a particle size in volume-based particle size distribution at which the cumulative frequency accumulated from the small particle size side reaches 50%. D50 may be measured by laser diffraction.

"Coating weight" refers to the mass of a coating film (a coating layer) per unit area.

"Electrode" collectively refers to a positive electrode and a negative electrode. Accordingly, an electrode active material collectively refers to a positive electrode active material and a negative electrode active material, for example. An electrode active material layer collectively refers to a positive electrode active material layer and a negative electrode active material layer, for example. An electrode may refer to at least one of a positive electrode and a negative electrode. An electrode may refer to a bipolar electrode.

2. Electrode Current Collector

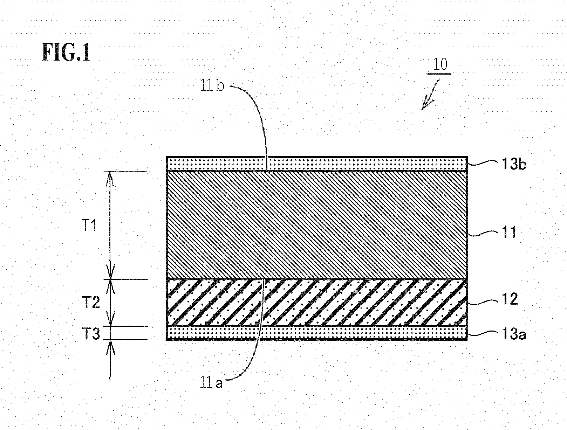

Fig. 1 is a conceptual view illustrating an electrode current collector according to the present embodiment. An electrode current collector 10 is in sheet form. Electrons are transferred between electrode current collector 10 and an electrode active material layer. Electrode current collector 10 includes a metal foil 11, an electrically-conductive resin layer 12, and a first carbon particle layer 13a, in this order. Electrode current collector 10 may further include a second carbon particle layer 13b, for example. Electrode current collector 10 may include second carbon particle layer 13b, metal foil 11, electrically-conductive resin layer 12, and first carbon particle layer 13a, in this order, for example. Hereinafter, "the first carbon particle layer" and "the second carbon particle layer" may be collectively called "a carbon particle layer".

2-1. Metal Foil

Metal foil 11 may be a base material of electrode current collector 10, for example. Metal foil 11 has a first thickness T1. First thickness T1 may be from 10 to 100 $\mu$m, or from 20 to 40 $\mu$m, for example. Metal foil 11 may be a pure metal foil, or may be an alloy foil, for example. Metal foil 11 may include, for example, at least one selected from the group consisting of Al, Mn, Ti, Fe, and Cr. Metal foil 11 may be an Al foil, an Al alloy foil, a Ti foil, a stainless steel (SUS) foil, or the like, for example. Metal foil 11 may be Alloy Nos. "1085", "1070", "1050", "1N30", "1100", "3003", "3004", "8021", and/or "8079" specified by "JIS H 4160: Aluminium and aluminium alloy foils", for example. The metal foil may have been subjected to rolling, annealing, and/or the like.

Metal foil 11 includes a first main face 11a and a second main face 11b. Second main face 11b is located opposite to first main face 11a. On first main face 11a, electrically-conductive resin layer 12 is stacked. Second main face 11b may be exposed. Second main face 11b may be covered with second carbon particle layer 13b.

2-2. Electrically-Conductive Resin Layer

Electrically-conductive resin layer 12 is stacked on first main face 11a. Electrically-conductive resin layer 12 may be directly laminated on first main face 11a. Electrically-conductive resin layer 12 has a second thickness T2. Second thickness T2 may be smaller than first thickness T1, for example. That is, the relationship of "T2≤T1" may be satisfied. Second thickness T2 may be from 10 to 100 $\mu$m, or may be from 5 to 20 $\mu$m, for example.

Electrically-conductive resin layer 12 may be non-porous, for example. Electrically-conductive resin layer 12 may not allow permeation of liquid. Electrically-conductive resin layer 12 includes a contiguous phase and a dispersed phase. The contiguous phase includes a resin material. The contiguous phase may also be called "a matrix resin" and the like, for example. The dispersed phase includes electrically-conductive particles. The dispersed phase may impart electrical conductivity to electrically-conductive resin layer 12. The electrically-conductive particles may also be called "an electrically-conductive filler" and the like, for example.

Electrically-conductive resin layer 12 may include the electrically-conductive particles in a mass fraction from 1 to 40%, with the remainder being made up of the resin material, for example. The mass fraction of the electrically-conductive particles may be from 5 to 30%, or from 10 to 25%, for example.

Electrically-conductive resin layer 12 may include the electrically-conductive particles in a volume fraction from 0.1 to 20%, with the remainder being made up of the resin material, for example. The volume fraction of the electrically-conductive particles may be from 1 to 5%, or from 5 to 15%, for example.

The resin material may include any component. The resin material may be insoluble in an electrolyte solution of the battery, for example. The resin material may include, for example, at least one selected from the group consisting of an olefin-based resin, a urethane-based resin, a polyamide-based resin, a cellulose-based resin, a polyether-based resin, an acrylic-based resin, a polyester-based resin, and the like. The resin material may include, for example, at least one selected from the group consisting of polyethylene (PE), polypropylene (PP), polyvinylidene difluoride (PVdF), polytetrafluoroethylene (PTFE), polyamide (PA), polyamide-imide (PAI), polyimide (PI), aromatic polyamide (aramid), liquid crystal polyester, polyacrylic acid ester, polymethacrylic acid ester, polystyrene, AS resin, ABS resin, polyphenylene ether (PPE), silicone resin, and modified products thereof. The modified product may be a maleic-acid-modified product, for example. The modification may reinforce adhesiveness and the like, for example. PE may include LLDPE (Linear Low Density Polyethylene), HDPE (High Density Polyethylene), and/or the like, for example. From the viewpoints of electrolyte solution resistance, formability, and the like, for example, LLDPE is a suitable resin material.

The electrically-conductive particles may have any shape. The electrically-conductive particles may be spherical, needle-like, plate-like, and/or the like, for example. The electrically-conductive particles may have a D50 from 1 to 15 $\mu$m, or from 1 to 10 $\mu$m, or from 2 to 5 $\mu$m, for example. The electrically-conductive particles are electronically conductive. The electrically-conductive particles may include, for example, at least one selected from the group consisting of electrically-conductive carbon particles and metal particles. The electrically-conductive particles may include, for example, at least one selected from the group consisting of carbon black, graphite, vapor grown carbon fibers (VGCFs), carbon nanotubes (CNTs), carbon nanofibers (CNFs), carbon nanospheres (CNSs), Ni particles, Sn particles, Cu particles, Ni-Sn alloy particles, Cu-Sn alloy particles, and Cu-Ni alloy particles. The carbon black may include, for example, at least one selected from the group consisting of acetylene black (AB), Ketjenblack (registered trademark), furnace black, channel black, lamp black, and thermal black.

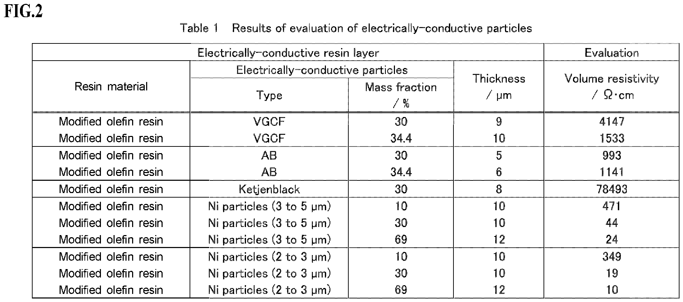

Fig. 2 is Table 1 showing results of evaluation of electrically-conductive particles. The volume resistivity of electrically-conductive resin layer 12 is measured by the procedure described below. From electrically-conductive resin layer 12, a sample is cut out. With the sample interposed between two Cu electrodes, the resistance of the sample is measured. The Cu electrodes are in cylinder shape (diameter, 20 mm). The resistance of the sample includes a contact resistance component. From the resistance of the sample, the contact resistance component is subtracted. The resistance after the subtraction is multiplied by the area of the Cu electrodes to determine the area resistivity. The resulting area resistivity is divided by the thickness of the sample (electrically-conductive resin layer 12), and thereby the volume resistivity is calculated.

All the electrically-conductive resin layers 12 in Table 1 include the same resin material (modified olefin resin). The electrically-conductive resin layers including AB particles and the electrically-conductive resin layers including Ni particles tend to have low volume resistivities. Electrically-conductive resin layer 12 may have a volume resistivity from 1 to 1000 Q.cm, or from 5 to 500 Q.cm, or from 10 to 50 Q.cm, for example.

2-3. First Carbon Particle Layer

First carbon particle layer 13a covers electrically-conductive resin layer 12. First carbon particle layer 13a has a third thickness T3. Third thickness T3 may be smaller than second thickness T2, for example. That is, the relationship of "T3≤T2≤T1" may be satisfied. Third thickness T3 may be from 0.1 to 5 $\mu$m, or from 0.3 to 3 $\mu$m, or from 0.5 to 1.5 $\mu$m, for example. First carbon particle layer 13a may have a coating weight of 5 mg/cm$^2$ or less, for example. The coating weight of first carbon particle layer 13a may be from 0.1 to 3 mg/cm$^2$, or from 0.5 to 1.5 mg/cm$^2$, for example.

First carbon particle layer 13a may be porous, for example. First carbon particle layer 13a includes electrically-conductive carbon particles. First carbon particle layer 13a may include the electrically-conductive carbon particles in a mass fraction of 50% or more, for example. First carbon particle layer 13a may further include a binder. First carbon particle layer 13a may include the electrically-conductive carbon particles in a mass fraction of 50% or more, with the remainder being made up of the binder, for example. The mass fraction of the electrically-conductive carbon particles may be from 75 to 99%, or from 80 to 95%, for example.

The electrically-conductive carbon particles are electronically conductive. The electrically-conductive carbon particles may include, for example, at least one selected from the group consisting of carbon black, graphite, VGCFs, graphene flakes (GFs), CNTs, CNFs, and CNSs.

The binder is capable of fixing the electrically-conductive carbon particles to electrically-conductive resin layer 12. The binder in first carbon particle layer 13a is a dispersed phase. The binder is not a contiguous phase. The binder may include any component. The binder may include, for example, at least one selected from the group consisting of PVdF, PTFE, carboxymethylcellulose (CMC), and polyacrylic acid (PAA).

First carbon particle layer 13a is capable of reducing in-plane resistance variations on the surface of electrically-conductive resin layer 12. The in-plane resistance variations may be evaluated with an SPM. The procedure of the evaluation is as follows. From electrode current collector 10, a sample is cut out. With an SPM, current mapping in first carbon particle layer 13a is measured. For example, an atomic force microscope with the trade name "Dimension Icon (registered trademark)" and a controller with the trade name "NanoScope V" manufactured by Bruker, and the like may be used. The measurement region is a square of 80 $\mu$m $\times$ 80 $\mu$m. The applied voltage is 10 V. From the results of current mapping, the standard deviation of current at all pixels (points of measurement) is determined. The smaller the standard deviation is, the smaller the in-plane resistance variations are considered to be. The standard deviation may be 0.3 nA or less, or 0.2 nA or less, or 0.15 nA or less, for example. The standard deviation may vary depending on the structure (thickness, porosity) and the composition of first carbon particle layer 13a, and the like, for example. First carbon particle layer 13a may be formed so as to achieve a standard deviation of 0.3 nA or less. The standard deviation of current in electrically-conductive resin layer 12 may be more than 1 nA, for example.

2-4. Second Carbon Particle Layer

Second carbon particle layer 13b covers second main face 11b. The configuration of second carbon particle layer 13b and the configuration of first carbon particle layer 13a may be the same as one another, or may be different from each other. For example, second carbon particle layer 13b may be either thicker or thinner than first carbon particle layer 13a. For example, the mass fraction of the electrically-conductive carbon particles in second carbon particle layer 13b may be either higher or lower than that in first carbon particle layer 13a.

3. Method of Producing Electrode Current Collector

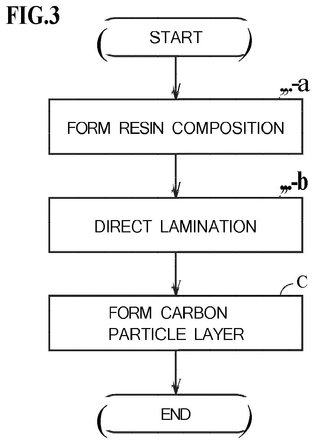

Fig. 3 is a schematic flowchart illustrating a method of producing an electrode current collector according to the present embodiment. Hereinafter, "the method of producing an electrode current collector according to the present embodiment" may be simply called "the present production method". The present production method includes "(a) forming a resin composition", "(b) direct lamination", and "(c) forming a carbon particle layer".

3-1. (a) Forming Resin Composition

The present production method includes forming a resin composition by mixing a resin material and electrically-conductive particles. The resin composition may also be called "a compound" and the like, for example. The resin composition may be in pellet form, for example. The resin composition may be formed by any method. For example, melt-kneading may be carried out. For example, melt-kneading may be carried out with the use of a twin-screw extruder/kneader.

3-2. (b) Direct Lamination

The present production method includes directly laminating the resin composition in molten form on metal foil 11 by an extrusion lamination method to form electrically-conductive resin layer 12. This technique may also be called "direct lamination" and the like. In direct lamination, an adhesive is not necessary. For example, an extruder/laminator may be used. A molten form of the resin composition may be formed. The molten form is extruded through a T-die to be made into a film, and thereby a resin film may be formed. The resulting resin film and metal foil 11 are passed between rolls, and thereby electrically-conductive resin layer 12 may be stacked on metal foil 11 (first main face 11a). After stacking, electrically-conductive resin layer 12 may be cooled.

3-3. (c) Forming Carbon Particle Layer

The present production method includes forming first carbon particle layer 13a by applying electrically-conductive carbon particles to electrically-conductive resin layer 12. For example, the electrically-conductive carbon particles, a binder, and a dispersion medium may be mixed to form a coating liquid. The dispersion medium may be selected depending on the type of the binder, and the like. The dispersion medium may include N-methyl-2-pyrrolidone (NMP) and/or the like, for example. The coating liquid may be applied to electrically-conductive resin layer 12 by a gravure coating method, for example. A gravure coating method is suitable for forming a thin coating film (with a thickness of 5 $\mu$m or less, for example). The coating liquid is dried, and thereby first carbon particle layer 13a may be formed. That is, electrode current collector 10 may be completed.

The present production method may further include forming second carbon particle layer 13b on second main face 11b of metal foil 11, for example. Second carbon particle layer 13b may be formed in the same manner as first carbon particle layer 13a.

4. Bipolar Battery

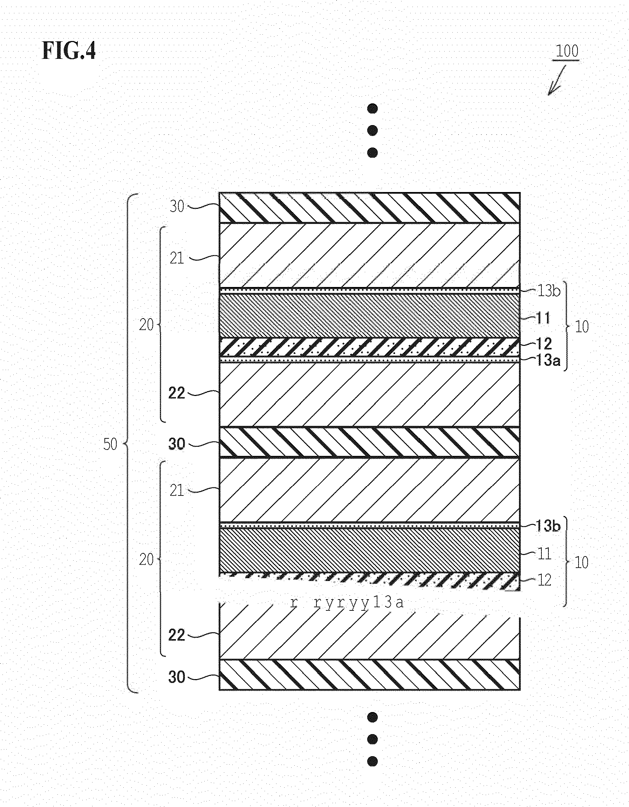

Electrode current collector 10 may be for a bipolar battery, for example. Fig. 4 is a conceptual view illustrating a bipolar battery according to the present embodiment. A bipolar battery 100 includes a power generation element 50. Bipolar battery 100 may include a liquid electrolyte (not illustrated). Bipolar battery 100 may include a gelled electrolyte (not illustrated).

4-1. Exterior Package

Bipolar battery 100 may include an exterior package (not illustrated). The exterior package may accommodate power generation element 50 and the liquid electrolyte. The exterior package may have any configuration. The exterior package may be a case made of metal, or may be a pouch made of a metal foil laminated film, for example. The exterior package may include Al and/or the like, for example.

4-2. Power Generation Element

Power generation element 50 may also be called "an electrode group", "an electrode assembly", and the like. Power generation element 50 includes a bipolar electrode 20 and a separator 30. Bipolar electrode 20 and separator 30 may be alternately stacked to form power generation element 50.

Bipolar electrode 20 includes electrode current collector 10, a positive electrode active material layer 21, and a negative electrode active material layer 22. That is, bipolar battery 100 includes electrode current collector 10. Positive electrode active material layer 21 is on the second main face 11b side. Positive electrode active material layer 21 may be formed directly on second main face 11b. Between positive electrode active material layer 21 and second main face 11b (metal foil 11), second carbon particle layer 13b may be interposed. Negative electrode active material layer 22 is placed on the first main face 11a side. Between negative electrode active material layer 22 and electrically-conductive resin layer 12, first carbon particle layer 13a is interposed.

4-3. Positive Electrode Active Material Layer

Positive electrode active material layer 21 may have a thickness from 10 to 1000 $\mu$m, or from 50 to 500 $\mu$m, or from 100 to 300 $\mu$m, for example. Positive electrode active material layer 21 includes a positive electrode active material. Positive electrode active material layer 21 may further include a conductive material, a binder, and the like, for example.

4-3-1. Conductive Material

The conductive material may form an electron conduction path inside positive electrode active material layer 21. The amount of the conductive material to be used may be, for example, from 0.1 to 10 parts by mass relative to 100 parts by mass of the positive electrode active material. The conductive material may include any component. The conductive material may include, for example, at least one selected from the group consisting of graphite, AB, Ketjenblack, VGCFs, CNTs, and GFs.

4-3-2. Binder

The binder is capable of fixing positive electrode active material layer 21 to electrode current collector 10. The amount of the binder to be used may be, for example, from 0.1 to 10 parts by mass relative to 100 parts by mass of the positive electrode active material. The binder may include any component. The binder may include, for example, at least one selected from the group consisting of PVdF, vinylidene difluoride-hexafluoropropylene copolymer (PVdF-HFP), PTFE, CMC, PAA, polyvinyl alcohol (PVA), polyvinylpyrrolidone (PVP), polyoxyethylene alkyl ether, and derivatives of these.

4-3-3. Other Components

Positive electrode active material layer 21 may further include an inorganic filler, an organic filler, a solid electrolyte, a surface modifier, a dispersant, a lubricant, a flame retardant, a protective agent, a flux, a coupling agent, an adsorbent, and/or the like, for example. Positive electrode active material layer 21 may include polyoxyethylene allylphenyl ether phosphate, zeolite, a silane coupling agent, $MoS_2$, $WO_3$, and/or the like, for example.

4-3-4. Positive Electrode Active Material

The positive electrode active material may be in particle form, for example. The positive electrode active material may have a D50 from 1 to 30 $\mu$m, or from 10 to 20 $\mu$m, or from 1 to 10 $\mu$m, for example. The positive electrode active material may include any component. The positive electrode active material may include a transition metal oxide, a polyanion compound, and/or the like, for example. In a single particle (positive electrode active material), the composition may be uniform, or may be non-uniform. For example, there may be a gradient in the composition from the surface of the particle toward the center. The composition may change contiguously, or may change non-contiguously (in steps).

4-3-4-1. Transition Metal Oxide (Space Group R-3m)

The transition metal oxide may have any crystal structure. For example, the transition metal oxide may include a crystal structure that belongs to a space group R-3m and/or the like. For example, a compound represented by the general formula "$LiMO_2$" may have a crystal structure that belongs to a space group R-3m. The transition metal oxide may be represented by the following formula (1-1), for example.

$$Li_{1-a}Ni_xM_{1-x}O_2 \dots \qquad (1\text{-}1)$$

In the above formula, the relationships of $-0.5 \leq a \leq 0.5$, $0 \leq x \leq 1$ are satisfied.
M may include, for example, at least one selected from the group consisting of Co, Mn, and Al.
In the above formula (1-1), x may satisfy the relationship of $0 < x \leq 0.1$, $0.1 \leq x \leq 0.2$, $0.2 \leq x \leq 0.3$, $0.3 \leq x \leq 0.4$, $0.4 \leq x \leq 0.5$, $0.5 \leq x \leq 0.6$, $0.6 \leq x \leq 0.7$, $0.7 \leq x \leq 0.8$, $0.8 \leq x \leq 0.9$, or $0.9 \leq x \leq 1$, for example. a may satisfy the relationship of $-0.4 \leq a \leq 0.4$, $-0.3 \leq a \leq 0.3$, $-0.2 \leq a \leq 0.2$, or $-0.1 \leq a \leq 0.1$, for example.
The transition metal oxide may include, for example, at least one selected from the group consisting of $LiCoO_2$, $LiMnO_2$, $LiNi_{0.9}Co_{0.1}O_2$, $LiNi_{0.9}Mn_{0.1}O_2$, and $LiNiO_2$.

4-3-4-2. NCM

The transition metal oxide may be represented by the following formula (1-2), for example. A compound represented by the following formula (1-2) may also be called "NCM".

$$Li_{1-a}Ni_xCo_yMn_zO_2 \dots \qquad (1\text{-}2)$$

In the above formula, the relationships of $-0.5 \leq a \leq 0.5$, $0 < x < 1$, $0 < y < 1$, $0 < z < 1$, $x+y+z=1$ are satisfied.
In the above formula (1-2), x may satisfy the relationship of $0 < x \leq 0.1$, $0.1 \leq x \leq 0.2$, $0.2 \leq x \leq 0.3$, $0.3 \leq x \leq 0.4$, $0.4 \leq x \leq 0.5$, $0.5 \leq x \leq 0.6$, $0.6 \leq x \leq 0.7$, $0.7 \leq x \leq 0.8$, $0.8 \leq x \leq 0.9$, or $0.9 \leq x < 1$, for example.
In the above formula (1-2), y may satisfy the relationship of $0 < y \leq 0.1$, $0.1 \leq y \leq 0.2$, $0.2 \leq y \leq 0.3$, $0.3 \leq y \leq 0.4$, $0.4 \leq y \leq 0.5$, $0.5 \leq y \leq 0.6$, $0.6 \leq y \leq 0.7$, $0.7 \leq y \leq 0.8$, $0.8 \leq y \leq 0.9$, or $0.9 \leq y < 1$, for example.
In the above formula (1-2), z may satisfy the relationship of $0 < z \leq 0.1$, $0.1 \leq z \leq 0.2$, $0.2 \leq z \leq 0.3$, $0.3 \leq z \leq 0.4$, $0.4 \leq z \leq 0.5$, $0.5 \leq z \leq 0.6$, $0.6 \leq z \leq 0.7$, $0.7 \leq z \leq 0.8$, $0.8 \leq z \leq 0.9$, or $0.9 \leq z < 1$, for example.
NCM may include, for example, at least one selected from the group consisting of $LiNi_{1/3}Co_{1/3}Mn_{1/3}O_2$, $LiNi_{0.4}Co_{0.3}Mn_{0.3}O_2$, $LiNi_{0.3}Co_{0.4}Mn_{0.3}O_2$, $LiNi_{0.3}Co_{0.3}Mn_{0.4}O_2$, $LiNi_{0.5}Co_{0.2}Mn_{0.3}O_2$, $LiNi_{0.5}Co_{0.3}Mn_{0.2}O_2$, $LiNi_{0.5}Co_{0.4}Mn_{0.1}O_2$, $LiNi_{0.5}Co_{0.1}Mn_{0.4}O_2$, $LiNi_{0.6}Co_{0.2}Mn_{0.2}O_2$, $LiNi_{0.6}Co_{0.3}Mn_{0.1}O_2$, $LiNi_{0.6}Co_{0.1}Mn_{0.3}O_2$, $LiNi_{0.7}Co_{0.1}Mn_{0.2}O_2$, $LiNi_{0.7}Co_{0.2}Mn_{0.1}O_2$, $LiNi_{0.8}Co_{0.1}Mn_{0.1}O_2$, and $LiNi_{0.9}Co_{0.05}Mn_{0.05}O_2$.

4-3-4-3. NCA

The transition metal oxide may be represented by the following formula (1-3), for example. A compound represented by the following formula (1-3) may also be called "NCA".

$$Li_{1-a}Ni_xCo_yAl_zO_2 \dots \qquad (1\text{-}3)$$

In the above formula, the relationships of $-0.5 \leq a \leq 0.5$, $0 < x < 1$, $0 < y < 1$, $0 < z < 1$, $x+y+z=1$ are satisfied.
In the above formula (1-3), x may satisfy the relationship of $0 < x \leq 0.1$, $0.1 \leq x \leq 0.2$, $0.2 \leq x \leq 0.3$, $0.3 \leq x \leq 0.4$, $0.4 \leq x \leq 0.5$, $0.5 \leq x \leq 0.6$, $0.6 \leq x \leq 0.7$, $0.7 \leq x \leq 0.8$, $0.8 \leq x \leq 0.9$, or $0.9 \leq x < 1$, for example.
In the above formula (1-3), y may satisfy the relationship of $0 < y \leq 0.1$, $0.1 \leq y \leq 0.2$, $0.2 \leq y \leq 0.3$, $0.3 \leq y \leq 0.4$, $0.4 \leq y \leq 0.5$, $0.5 \leq y \leq 0.6$, $0.6 \leq y \leq 0.7$, $0.7 \leq y \leq 0.8$, $0.8 \leq y \leq 0.9$, or $0.9 \leq y < 1$, for example.
In the above formula (1-3), z may satisfy the relationship of $0 < z \leq 0.1$, $0.1 \leq z \leq 0.2$, $0.2 \leq z \leq 0.3$, $0.3 \leq z \leq 0.4$, $0.4 \leq z \leq 0.5$,

$0.5 \leq z \leq 0.6$, $0.6 \leq z \leq 0.7$, $0.7 \leq z \leq 0.8$, $0.8 \leq z \leq 0.9$, or $0.9 \leq z < 1$, for example.

NCA may include, for example, at least one selected from the group consisting of $LiNi_{0.7}Co_{0.1}Al_{0.2}O_2$, $LiNi_{0.7}Co_{0.2}Al_{0.1}O_2$, $LiNi_{0.8}Co_{0.1}Al_{0.1}O_2$, $LiNi_{0.8}Co_{0.17}Al_{0.03}O_2$, $LiNi_{0.8}Co_{0.15}Al_{0.05}O_2$, and $LiNi_{0.9}Co_{0.05}Al_{0.05}O_2$.

### 4-3-4-4. Multi-Component System

The positive electrode active material may include two or more NCMs and/or the like, for example. The positive electrode active material may include NCM ($0.6 \leq x$) and NCM ($x < 0.6$), for example. "NCM ($0.6 \leq x$)" refers to a compound in which x (Ni ratio) in the above formula (1-2) is 0.6 or more. NCM ($0.6 \leq x$) may also be called "a high-nickel material", for example. NCM ($0.6 \leq x$) includes $LiNi_{0.8}Co_{0.1}Mn_{0.1}O_2$ and/or the like, for example. "NCM($x<0.6$)" refers to a compound in which x (Ni ratio) in the above formula (1-2) is less than 0.6. NCM ($x<0.6$) includes $LiNi_{1/3}Co_{1/3}Mn_{1/3}O_2$ and/or the like, for example. The mixing ratio (mass ratio) between NCM ($0.6 \leq x$) and NCM ($x<0.6$) may be "NCM ($0.6 \leq x$)/NCM ($x<0.6$)=9/1 to 1/9", or "NCM ($0.6 \leq x$)/NCM ($x<0.6$)=9/1 to 4/6", or "NCM ($0.6 \leq x$)/NCM ($x<0.6$)=9/1 to 3/7", for example.

The positive electrode active material may include NCA and NCM, for example. The mixing ratio (mass ratio) between NCA and NCM may be "NCA/NCM=9/1 to 1/9", or "NCA/NCM=9/1 to 4/6", or "NCA/NCM=9/1 to 3/7", for example. Between NCA and NCM, the Ni ratio may be the same or may be different. The Ni ratio of NCA may be more than the Ni ratio of NCM. The Ni ratio of NCA may be less than the Ni ratio of NCM.

### 4-3-4-5. Transition Metal Oxide (Space Group C2/m)

The transition metal oxide may include a crystal structure that belongs to a space group C2/m and/or the like, for example. The transition metal oxide may be represented by the following formula (1-4), for example.

$$Li_2MO_3 \ldots \qquad (1\text{-}4)$$

In the above formula, M may include, for example, at least one selected from the group consisting of Ni, Co, Mn, and Fe.

The positive electrode active material may include a mixture of $LiMO_2$ (space group R-3m) and $Li_2MO_3$ (space group C2/m), for example. The positive electrode active material may include a solid solution that is formed of $LiMO_2$ and $Li_2MO_3$ ($Li_2MO_3$-$LiMO_2$), and/or the like, for example.

### 4-3-4-6. Transition Metal Oxide (Space Group Fd-3m)

The transition metal oxide may include a crystal structure that belongs to a space group Fd-3m, and/or the like, for example. The transition metal oxide may be represented by, for example, the following formula (1-5):

$$LiMn_{2-x}M_xO_4 \ldots \qquad (1\text{-}5)$$

where the relationship of $0 \leq x \leq 2$ is satisfied.

M may include, for example, at least one selected from the group consisting of Ni, Fe, and Zn.

$LiM_2O_4$ (space group Fd-3m) may include, for example, at least one selected from the group consisting of $LiMn_2O_4$ and $LiMn_{1.5}Ni_{0.5}O_4$. The positive electrode active material may include a mixture of $LiMO_2$ (space group R-3m) and $LiM_2O_4$ (space group Fd-3m), for example. The mixing ratio (mass ratio) between $LiMO_2$ (space group R-3m) and $LiM_2O_4$ (space group Fd-3m) may be "$LiMO_2/LiM_2O_4$=9/1 to 9/1", or "$LiMO_2/LiM_2O_4$=9/1 to 5/5", or "$LiMO_2/LiM_2O_4$=9/1 to 7/3", for example.

### 4-3-4-7. Polyanion Compound

The polyanion compound may include a phosphoric acid salt (such as $LiFePO_4$ for example), a silicic acid salt, a boric acid salt, and/or the like, for example. The polyanion compound may be represented by the following formulae (1-6) to (1-9), for example.

$$LiMPO_4 \ldots \qquad (1\text{-}6)$$

$$Li_{2-x}MPO_4F \ldots \qquad (1\text{-}7)$$

$$Li_2MSiO_4 \ldots \qquad (1\text{-}8)$$

$$LiMBO_3 \dots \qquad (1\text{-}9)$$

In the above formulae (1-6) to (1-9), M may include, for example, at least one selected from the group consisting of Fe, Mn, and Co. In the above formula (1-7), the relationship of $0 \leq x \leq 2$ may be satisfied, for example.

The positive electrode active material may include a mixture of $LiMO_2$ (space group R-3m) and the polyanion compound, for example. The mixing ratio (mass ratio) between $LiMO_2$ (space group R-3m) and the polyanion compound may be "$LiMO_2$/(polyanion compound) =9/1 to 9/1", or "$LiMO_2$/(polyanion compound) =9/1 to 5/5", or "$LiMO_2$/(polyanion compound) =9/1 to 7/3", for example.

4-3-4-8. Dopant

To the positive electrode active material, a dopant may be added. The dopant may be diffused throughout the entire particle, or may be locally distributed. For example, the dopant may be locally distributed on the particle surface. The dopant may be a substituted solid solution atom, or may be an intruding solid solution atom. The amount of the dopant to be added (the molar fraction relative to the total amount of the positive electrode active material) may be from 0.01 to 5%, or may be from 0.1 to 3%, or may be from 0.1 to 1%, for example. A single type of dopant may be added, or two or more types of dopant may be added. The two or more dopants may form a complex.

The dopant may include, for example, at least one selected from the group consisting of B, C, N, a halogen, Si, Na, Mg, Al, Mn, Co, Cr, Sc, Ti, V, Cu, Zn, Ga, Ge, Se, Sr, Y, Zr, Nb, Mo, In, Pb, Bi, Sb, Sn, W, La, Ce, Pr, Nd, Pm, Sm, Eu, Gd, Tb, Dy, Ho, Er, Tm, Yb, Lu, and an actinoid.

For example, to NCA, a combination of "Zr, Mg, W, Sm", a combination of "Ti, Mn, Nb, Si, Mo", or a combination of "Er, Mg" may be added.

For example, to NCM, Ti may be added. For example, to NCM, a combination of "Zr, W", a combination of "Si, W", or a combination of "Zr, W, Al, Ti, Co" may be added.

4-3-4-9. Surface Covering

Positive electrode active material layer 21 may include a composite particle. The composite particle includes a core particle and a covering layer. The core particle includes a positive electrode active material. The covering layer covers at least part of the surface of the core particle. The covering layer may have a thickness from 1 to 3000 nm, or from 5 to 2000 nm, or from 10 to 1000 nm, or from 10 to 100 nm, or from 10 to 50 nm, for example. The thickness of the covering layer may be measured in an SEM (Scanning Electron Microscope) image of a cross section of the particle, and/or the like, for example. More specifically, the composite particle is embedded in a resin material to prepare a sample. With the use of an ion milling apparatus, a cross section of the sample is exposed. For example, an ion milling apparatus with the trade name "ArBlade (registered trademark) 5000" manufactured by Hitachi High-Technologies (or a similar product) may be used. The cross section of the sample is examined by an SEM. For example, an SEM apparatus with the trade name "SU8030" manufactured by Hitachi High-Technologies (or a similar product) may be used. For each of ten composite particles, the thickness of the covering layer is measured in twenty fields of view. The arithmetic mean of a total of 200 thickness measurements is used.

The ratio of the part of the surface of the core particle covered by the covering layer is also called "a covering rate". The covering rate may be 1% or more, or 10% or more, or 30% or more, or 50% or more, or 70% or more, for example. The covering rate may be 100% or less, or 90% or less, or 80% or less, for example.

For example, the covering rate may be measured by XPS (X-ray Photoelectron Spectroscopy). For example, an XPS apparatus with the trade name "PHI X-tool" manufactured by ULVAC-PHI (or a similar product) may be used. A sample powder consisting of the composite particle is loaded in the XPS apparatus. Narrow scan analysis is carried out. The measurement data is processed with an analysis software. For example, an analysis software with the trade name "MulTiPak" manufactured by ULVAC-PHI (or a similar product) may be used. The measurement data is analyzed to detect a plurality of types of elements. From the area of each peak, the ratio of the detected element is determined. By the following equation (1-10), the covering rate is determined.

$$\theta = \{ I_1 / (I_0 + I_1) \} \times 100 \dots (1\text{-}10)$$

$\theta$: Covering rate [%]
$I_0$: Ratio of element attributable to core particle
$I_1$: Ratio of element attributable to covering layer

For example, when the core particle includes NCM, $I_0$ represents the total ratio of the elements "Ni, Co, Mn".

For example, when the core particle includes NCA, $I_0$ represents the total ratio of the elements "Ni, Co, Al". For example, when the covering layer includes P and B, $I_1$ represents the total ratio of the elements "P, B".

The covering layer may include any component. The covering layer may include an elementary substance, organic matter, an inorganic acid salt, an organic acid salt, a hydroxide, an oxide, a carbide, a nitride, a sulfide, a halide, and/or the like, for example. The covering layer may include, for example, at least one selected from the group consisting of B, Al, W, Zr, Ti, Co, F, lithium compound (such as $Li_2CO_3$, $LiHCO_3$, $LiOH$, $Li_2O$, for example), tungsten oxide (such as $WO_3$, for example), titanium oxide (such as $TiO_2$, for example), zirconium oxide (such as $ZrO_2$, for example), boron oxide, boron phosphate (such as $BPO_4$, for example), aluminum oxide (such as $Al_2O_3$, for example), boehmite, aluminum hydroxide, phosphoric acid salt [such as $Li_3PO_4$, $(NH_4)_3PO_4$, $AlPO_4$, for example], boric acid salt (such as $Li_2B_4O_7$, $LiBO_3$, for example), polyacrylic acid salt (such as Li salt, Na salt, $NH_4$ salt), acetic acid salt (such as Li salt, for example), CMC (such as CMC-Na, CMC-Li, CMC-$NH_4$), $LiNbO_3$, $Li_2TiO_3$, and Li-containing halide (such as $LiAlCl_4$, $LiTiAlF_6$, $LiYBr_6$, $LiYCl_6$, for example).

4-3-4-10. Hollow Particles, Solid Particles

Each of a hollow particle and a solid particle is a secondary particle (an aggregate of primary particles). In a cross-sectional image of "a hollow particle", the proportion of the area of the central cavity relative to the entire cross-sectional area of the particle is 30% or more. The proportion of the cavity in a hollow particle may be 40% or more, or 50% or more, or 60% or more, for example. In a cross-sectional image of "a solid particle", the proportion of the area of the central cavity relative to the entire cross-sectional area of the particle is less than 30%. The proportion of the cavity in a solid particle may be 20% or less, or 10% or less, or 5% or less, for example. The positive electrode active material may be hollow particles, or may be solid particles. A mixture of hollow particles and solid particles may be used. The mixing ratio (mass ratio) between hollow particles and solid particles may be "(hollow particles)/(solid particles)=1/9 to 9/1 ", or "(hollow particles)/(solid particles)=2/8 to 8/2", or "(hollow particles)/(solid particles)=3/7 to 7/3", or "(hollow particles)/(solid particles)=4/6 to 6/4", for example.

4-3-4-11. Large Particles, Small Particles

The positive electrode active material may have a unimodal particle size distribution (based on the number), for example. The positive electrode active material may have a multimodal particle size distribution, for example. The positive electrode active material may have a bimodal particle size distribution, for example. That is, the positive electrode active material may include large particles and small particles. When the particle size distribution is bimodal, the particle size corresponding to the peak top of the larger particle size is regarded as the particle size of the large particles ($d_L$). The particle size corresponding to the peak top of the smaller particle size is regarded as the particle size of the small particles (ds). The particle size ratio ($d_L$/ds) may be from 2 to 10, or from 2 to 5, or from 2 to 4, for example. $d_L$ may be from 8 to 20 $\mu$m, or from 8 to 15 $\mu$m, for example. $d_S$ may be from 1 to 10 $\mu$m, or from 1 to 5 $\mu$m, for example.

For example, with the use of a waveform analysis software, peak separating processing may be carried out for the particle size distribution. The ratio between the peak area of the large particles ($S_L$) and the peak area of the small particles (Ss) may be "$S_L$/Ss=1/9 to 9/1", or "$S_L/S_S$=5/5 to 9/1", or "$S_L/S_S$=7/3 to 9/1", for example.

The number-based particle size distribution is measured by a microscope method. From the positive electrode active material layer, a plurality of cross-sectional samples are taken. The cross-sectional sample may include a cross section vertical to the surface of the positive electrode active material layer, for example. By ion milling and/or the like, for example, cleaning is carried out to the side that is to be observed. By SEM, the cross-sectional sample is examined. The magnification for the examination is adjusted in such a way that 10 to 100 particles are contained within the examination field of view. The Feret diameters of all the particles in the image are measured. "Feret diameter" refers to the distance between two points located farthest apart from each other on the outline of the particle. The plurality of the cross-sectional samples are examined to obtain a total of 1000 or more Feret diameters. From the 1000 or more Feret diameters, number-based particle size distribution is created.

The bimodal particle size distribution may be formed by two types of particles mixed together. These two types of particles have different particle size distributions. For example, the two types of particles may have different D50. For example, the large particles may have a D50 from 8 to 20 $\mu$m, or from 8 to 15 $\mu$m. For example, the small particles may have a D50 from 1 to 10 $\mu$m, or from 1 to 5 $\mu$m. The ratio of the D50 of the large particles to the D50 of the small particles may be from 2 to 10, or from 2 to 5, or from 2 to 4, for example. The mixing ratio (mass ratio) between the large particles and the small particles may be "(large particles)/(small particles)=1/9 to 9/1", or "(large particles)/(small particles)=5/5 to 9/1", or "(large particles)/(small particles)=7/3 to 9/1 ", for example.

The large particles and the small particles may have the same composition, or may have different compositions. For example, the large particles may be NCA and the small particles may be NCM. For example, the large particles may be NCM ($0.6\leq x$) and the small particles may be NCM ($x<0.6$). Similarly to the positive electrode active material, a negative electrode active material (described below) may also include large particles and small particles.

4-4. Negative Electrode Active Material Layer

Negative electrode active material layer 22 may have a thickness from 10 to 1000 $\mu$m, or from 50 to 500 $\mu$m, or from 100 to 300 $\mu$m, for example. Negative electrode active material layer 22 includes a negative electrode active material. Negative electrode active material layer 22 may further include a conductive material, a binder, and the like, for example.

4-4-1. Conductive Material

The conductive material may form an electron conduction path inside negative electrode active material layer 22. The amount of the conductive material to be used may be, for example, from 0.1 to 10 parts by mass relative to 100 parts by mass of the negative electrode active material. The conductive material may include any component. The conductive material may include, for example, at least one selected from the group consisting of AB, Ketjenblack (registered trademark), VGCFs, CNTs, and GFs. The CNTs may include at least one selected from the group consisting of single-walled CNTs (SWCNTs) and multi-walled CNTs (MWCNTs).

4-4-2. Binder

The binder is capable of fixing negative electrode active material layer 22 to electrode current collector 10. The amount of the binder to be used may be, for example, from 0.1 to 10 parts by mass relative to 100 parts by mass of the negative electrode active material. The binder may include any component. The binder may include, for example, at least one selected from the group consisting of styrenebutadiene rubber (SBR), acrylate butadiene rubber (ABR), sodium alginate, carboxymethylcellulose (such as CMC-H, CMC-Na, CMC-Li, CMC-NH$_4$), polyacrylic acid (such as PAA-H, PAA-Na, PAA-Li), polyacrylonitrile (PAN), PVdF, PTFE, acrylic-based resin, methacrylic-based resin, PVP, PVA, and derivatives of these. For example, the expression "CMC-Na" refers to a Na salt of CMC. For example, the expression "CMC-H" refers to an acid-type CMC. The same applies to "PAA-Na" and the like.

4-4-3. Other Components

Negative electrode active material layer 22 may further include an inorganic filler, an organic filler, a solid electrolyte, a surface modifier, a dispersant, a lubricant, a flame retardant, a protective agent, a flux, a coupling agent, an adsorbent, and/or the like, for example. Negative electrode active material layer 22 may include a layered silicate (such as smectite, montmorillonite, bentonite, hectorite), an inorganic filler (such as solid alumina, hollow silica, boehmite), a polysiloxane compound, and/or the like, for example.

4-4-4. Negative Electrode Active Material

The negative electrode active material may be in particle form, or may be in sheet form, for example. The negative electrode active material may have a D50 from 1 to 30 $\mu$m, or from 10 to 20 $\mu$m, or from 1 to 10 $\mu$m, for example.

4-4-4-1. Carbon-Based Active Material

The negative electrode active material may include a carbon-based active material, for example. The carbon-based active material may include, for example, at least one selected from the group consisting of graphite, soft carbon, and hard carbon. The "graphite" collectively refers to natural graphite and artificial graphite. The graphite may be a mixture of natural graphite and artificial graphite. The mixing ratio (mass ratio) may be "(natural graphite)/(artificial graphite)=1/9 to 9/1", or "(natural graphite)/(artificial graphite)=2/8 to 8/2", or "(natural graphite)/(artificial graphite)=3/7 to 7/3", for example.
The graphite may include a dopant. The dopant may include, for example, at least one selected from the group consisting of B, N, P, Li, and Ca. The amount thereof to be added in molar fraction may be from 0.01 to 5%, or from 0.1 to 3%, or from 0.1 to 1%, for example.
The surface of the graphite may be covered with amorphous carbon, for example. The surface of the graphite may be covered with another type of material, for example. This another type of material may include, for example, at least one selected from the group consisting of P, W, Al, and O. The another type of material may include, for example, at least one selected from the group consisting of Al(OH)$_3$, AlOOH, Al$_2$O$_3$, WO$_3$, Li$_2$CO$_3$, LiHCO$_3$, and Li$_3$PO$_4$.

4-4-4-2. Alloy-Based Active Material

The negative electrode active material may include an alloy-based active material, for example. The negative electrode active material may include, for example, at least one selected from the group consisting of Si, Li silicate, SiO, Si-based alloy, Sn, SnO, and Sn-based alloy.

SiO may be represented by the following formula (2-1), for example.

$$SiO_x... \qquad (2\text{-}1)$$

In the above formula, the relationship of $0<x<2$ is satisfied.

In the above formula (2-1), x may satisfy the relationship of $0.5 \leq x \leq 1.5$ or $0.8 \leq x \leq 1.2$, for example.

Li silicate may include, for example, at least one selected from the group consisting of $Li_4SiO_4$, $Li_2SiO_3$, $Li_2Si_2O_5$, and $Li_8SiO_6$. The negative electrode active material may include a mixture of Si and Li silicate, for example. The mixing ratio (mass ratio) may be "Si/(Li silicate)=1/9 to 9/1", or "Si/(Li silicate)=2/8 to 8/2", or "Si/(Li silicate)=3/7 to 7/3", or "Si/(Li silicate)=4/6 to 6/4", for example.

The alloy-based active material (such as Si, SiO) may include an additive. The additive may be a substituted solid solution atom or an intruding solid solution atom, for example. The additive may be an adherent adhered to the surface of the alloy-based active material. The adherent may be an elementary substance, an oxide, a carbide, a nitride, a halide, and/or the like, for example. The amount thereof to be added in molar fraction may be from 0.01 to 5%, or from 0.1 to 3%, or from 0.1 to 1%, for example. The additive may include, for example, at least one selected from the group consisting of Li, Na, K, Rb, Be, Mg, Ca, Sr, Fe, Ba, B, Al, Ga, In, C, Ge, Sn, Pb, N, P, As, Y, Sb, and S. That is, SiO may be doped with Mg and/or Na. For example, Mg silicate, Na silicate, and/or the like may be formed. For example, boron oxide (such as $B_2O_3$, for example), yttrium oxide (such as $Y_2O_3$, for example), and/or the like may be added to SiO.

4-4-4-3. Si-C Composite Material

The negative electrode active material may include a composite material of the carbon-based active material (such as graphite) and the alloy-based active material (such as Si). A composite material including Si and carbon may also be called "a Si-C composite material". For example, Si microparticles may be dispersed inside carbon particles. For example, Si microparticles may be dispersed inside graphite particles. For example, Li silicate particles may be covered with a carbon material (such as amorphous carbon).

4-4-4-4. Other Active Materials

The negative electrode active material may include, for example, at least one selected from the group consisting of Li metal, Li-based alloy, and $Li_4Ti_5O_{12}$. The negative electrode active material may include a Li foil and/or the like, for example.

4-5. Separator

Separator 30 is capable of separating positive electrode active material layer 21 from negative electrode active material layer 22. Separator 30 is electrically insulating. Separator 30 may include, for example, at least one selected from the group consisting of a resin film, an inorganic particle layer, and an organic particle layer. Separator 30 may include a resin film and an inorganic particle layer, for example.

4-5-1. Resin Film

The resin film is porous. The resin film may include a microporous film, a nonwoven fabric, and/or the like, for example. The resin film includes a resin skeleton. The resin skeleton may be contiguous in mesh form, for example. Gaps in the resin skeleton form pores. The resin film allows a liquid electrolyte to permeate therethrough. The resin film may have an average pore size of 1 $\mu$m or less, for example. The resin film may have an average pore size from 0.01 to 1 $\mu$m, or from 0.1 to 0.5 $\mu$m, for example. "Average pore size" may be measured by mercury porosimetry. The resin film may have a Gurley value from 50 to 250 s/100cm$^3$, for example. "Gurley value" may be measured by a Gurley test method.

The resin film may include, for example, at least one selected from the group consisting of an olefin-based resin, a urethane-based resin, a polyamide-based resin, a cellulose-based resin, a polyether-based resin, an acrylic-based resin, a polyester-based resin, and the like. The resin film may include, for example, at least one selected from the group consisting of PE, PP, PA, PAI, PI, aromatic polyamide (aramid), PPE, and derivatives of these. The resin film may be formed by stretching, phase separation, and/or the like, for example. The resin film may have a thickness from 5 to 50 $\mu$m, or from 10 to 25 $\mu$m, for example.

The resin film may have a monolayer structure. The resin film may consist of a PE layer, for example. A skeleton of a PE layer is formed of PE. The PE layer may have shut-down function. The resin film may have a multilayer structure, for example. The resin film may include a PP layer and a PE layer, for example. A skeleton of a PP layer is formed of PP. The resin film may have a three-layer structure, for example. The resin film may be formed by stacking a PP layer, a PE layer, and a PP layer in this order, for example. The thickness of the PE layer may be from 5 to 20 $\mu$m, for example. The thickness of the PP layer may be from 3 to 10 $\mu$m, for example.

### 4-5-2. Inorganic Particle Layer

The inorganic particle layer may be formed on the surface of the resin film. The inorganic particle layer may be formed on only one side of the resin film, or may be formed on both sides of the resin film. The inorganic particle layer may be formed on the side facing positive electrode active material layer 21, or may be formed on the side facing negative electrode active material layer 22. The inorganic particle layer may be formed on the surface of positive electrode active material layer 21, or may be formed on the surface of negative electrode active material layer 22.

The inorganic particle layer is porous. The inorganic particle layer includes inorganic particles. The inorganic particles may also be called "an inorganic filler". Gaps between the inorganic particles form pores. The inorganic particle layer may have a thickness from 0.5 to 10 $\mu$m, or from 1 to 5 $\mu$m, for example. The inorganic particles may include a heat-resistant material, for example. The inorganic particle layer that includes a heat-resistant material is also called "HRL (Heat Resistance Layer)". The inorganic particles may include at least one selected from the group consisting of boehmite, alumina, zirconia, titania, magnesia, silica, and the like. The inorganic particles may have any shape. The inorganic particles may be spherical, rod-like, plate-like, fibrous, and/or the like, for example. The inorganic particles may have a D50 from 0.1 to 10 $\mu$m, or from 0.5 to 3 $\mu$m, for example. The inorganic particle layer may further include a binder. The binder may include, for example, at least one selected from the group consisting of an acrylic-based resin, a polyamide-based resin, a fluorine-based resin, an aromatic-polyether-based resin, and a liquid-crystal-polyester-based resin, and the like.

### 4-5-3. Organic Particle Layer

Separator 30 may include an organic particle layer, for example. Separator 30 may include an organic particle layer instead of the resin film, for example. Separator 30 may include an organic particle layer instead of the inorganic particle layer, for example. Separator 30 may include both the resin film and an organic particle layer. Separator 30 may include both the inorganic particle layer and an organic particle layer. Separator 30 may include the resin film, the inorganic particle layer, and an organic particle layer.

The organic particle layer may have a thickness from 0.1 to 50 $\mu$m, or from 0.5 to 20 $\mu$m, or from 0.5 to 10 $\mu$m, or from 1 to 5 $\mu$m, for example. The organic particle layer includes organic particles. The organic particles may also be called "an organic filler". The organic particles may include a heat-resistant material. The organic particles may include, for example, at least one selected from the group consisting of PE, PP, PTFE, PI, PAI, PA, aramid, and the like. The organic particles may be spherical, rod-like, plate-like, fibrous, and/or the like, for example. The organic particles may have a D50 from 0.1 to 10 $\mu$m, or from 0.5 to 3 $\mu$m, for example.

Separator 30 may include a mixed layer, for example. The mixed layer includes both inorganic particles and organic particles.

### 4-6. Liquid Electrolyte

Bipolar battery 100 may include a liquid electrolyte. The liquid electrolyte is a Li-ion conductor. The liquid electrolyte may include an electrolyte solution, for example. The electrolyte solution includes a solvent and a solute.

### 4-6-1. Solute

The concentration of the solute may be from 0.5 to 1 mol/L, or from 1 to 1.5 mol/L, or from 1.5 to 2 mol/L, or from 2 to 2.5 mol/L, or from 2.5 to 3 mol/L, for example. The solute includes a supporting salt (a Li salt). The solute may include an inorganic acid salt, an imide salt, an oxalato complex, a halide, and/or the like, for example. The solute may include, for example, at least one selected from the group consisting of $LiPF_6$, $LiBF_4$, $LiClO_4$, $LiAsF_6$, $LiSbF_6$, $LiN(SO_2F)_2$ "LiFSI", $LiN(SO_2CF_3)_2$ "LiTFSI", $LiB(C_2O_4)_2$ "LiBOB", $LiBF_2(C_2O_4)$ "LiDFOB", $LiPF_2(C_2O_4)_2$ "LiDFOP", $LiPO_2F_2$, $FSO_3Li$, LiI, LiBr, and derivatives of these.

4-6-2. Carbonate-Based Solvent

The electrolyte solution may include a carbonate-based solvent (a carbonate-ester-based solvent), for example. The solvent may include a cyclic carbonate, a chain carbonate, a fluorinated carbonate, and/or the like, for example. The solvent may include, for example, at least one selected from the group consisting of ethylene carbonate (EC), propylene carbonate (PC), butylene carbonate (BC), dimethyl carbonate (DMC), diethyl carbonate (DEC), ethyl methyl carbonate (EMC), monofluoroethylene carbonate (FEC), difluoroethylene carbonate, 4,4-difluoroethylene carbonate, trifluoroethylene carbonate, perfluoroethylene carbonate, fluoropropylene carbonate, difluoropropylene carbonate, and derivatives of these.

The solvent may include a cyclic carbonate (such as EC, PC, FEC) and a chain carbonate (such as EMC, DMC, DEC). The mixing ratio (volume ratio) between the cyclic carbonate and the chain carbonate may be "(cyclic carbonate)/(chain carbonate)=1/9 to 4/6", or "(cyclic carbonate)/(chain carbonate)=2/8 to 3/7", or "(cyclic carbonate)/(chain carbonate)=3/7 to 4/6", for example.

The solvent may include a cyclic carbonate (such as EC, PC) and a fluorinated cyclic carbonate (such as FEC). The mixing ratio (volume ratio) between the cyclic carbonate and the fluorinated cyclic carbonate may be "(cyclic carbonate)/(fluorinated cyclic carbonate)=99/1 to 90/10", or "(cyclic carbonate)/(fluorinated cyclic carbonate)=9/1 to 1/9", or "(cyclic carbonate)/(fluorinated cyclic carbonate)=9/1 to 7/3", or "(cyclic carbonate)/(fluorinated cyclic carbonate)=3/7 to 1/9", for example.

The solvent may include EC, FEC, EMC, DMC, and DEC, for example. The volume ratio of these components may satisfy the relationship represented by the following equation (3-1), for example.

$$V_{EC}+V_{FEC}+V_{EMC}+V_{DMC}+V_{DEC}=10 \ ... \qquad (3\text{-}1)$$

In the above equation, each of $V_{EC}$, $V_{FEC}$, $V_{EMC}$, $V_{DMC}$, and $V_{DEC}$ represents the volume ratio of EC, FEC, EMC, DMC, and DEC, respectively.

The following relationships are satisfied: $1 \leq V_{EC} \leq 4$, $0 \leq V_{FEC} \leq 3$, $V_{EC}+V_{FEC} \leq 4$, $0 \leq V_{EMC} \leq 9$, $0 \leq V_{DMC} \leq 9$, $0 \leq V_{DEC} \leq 9$, $6 \leq V_{EMC}+V_{DMC}+V_{DEC} \leq 9$.

In the above equation (3-1),

the relationship of $1 \leq V_{EC} \leq 2$ or $2 \leq V_{EC} \leq 3$ may be satisfied, for example;
the relationship of $1 \leq V_{FEC} \leq 2$ or $2 \leq V_{FEC} \leq 4$ may be satisfied, for example;
the relationship of $3 \leq V_{EMC} \leq 4$ or $6 \leq V_{EMC} \leq 8$ may be satisfied, for example;
the relationship of $3 \leq V_{DMC} \leq 4$ or $6 \leq V_{DMC} \leq 8$ may be satisfied, for example; and
the relationship of $3 \leq V_{DEC} \leq 4$ or $6 \leq V_{DEC} \leq 8$ may be satisfied, for example.

The solvent may have a composition of "EC/EMC=3/7", "EC/DMC=3/7", "EC/FEC/DEC=1/2/7", "EC/DMC/EMC=3/4/3", "EC/DMC/EMC=3/3/4", "EC/FEC/DMC/EMC=2/1/4/3", "EC/FEC/DMC/EMC=1/2/4/3", "EC/FEC/DMC/EMC=2/1/3/4", "EC/FEC/DMC/EMC=1/2/3/4" (volume ratio), and/or the like, for example.

4-6-3. Ether-Based Solvent

The electrolyte solution may include an ether-based solvent. The electrolyte solution may include, for example, at least one selected from the group consisting of tetrahydrofuran (THF), 1,4-dioxane (DOX), 1,3-dioxolane (DOL), 1,2-dimethoxyethane (DME), 1,2-diethoxyethane (DEE), hydrofluoroether (HFE), ethylglyme, triglyme, tetraglyme, and derivatives of these.

4-6-4. Additive

The electrolyte solution may include any additive. The amount to be added (the mass fraction to the total amount of the electrolyte solution) may be from 0.01 to 5%, or from 0.05 to 3%, or from 0.1 to 1%, for example. The additive may include an SEI (Solid Electrolyte Interphase) formation promoter, an SEI formation inhibitor, a gas generation agent, an overcharging inhibitor, a flame retardant, an antioxidant, an electrode-protecting agent, a surfactant, and/or the like, for example.

The additive may include, for example, at least one selected from the group consisting of vinylene carbonate (VC), vinylethylene carbonate (VEC), 1,3-propane sultone (PS), tert-amylbenzene, 1,4-di-tert-butylbenzene, biphenyl (BP), cyclohexylbenzene (CHB), ethylene sulfite (ES), propane sultone (PS), ethylene sulfate (DTD), $\gamma$-butyrolactone, phosphazene compound, carboxylate ester [such as methyl formate (MF), methyl acetate (MA), methyl propionate (MP), diethyl malonate (DEM), for example], fluorobenzene (such as monofluorobenzene (FB), 1,2-difluorobenzene, 1,3-difluorobenzene, 1,4-difluorobenzene, 1,2,3-trifluorobenzene, 1,2,4-trifluorobenzene, 1,3,5-trifluorobenzene, 1,2,3,4-tetrafluorobenzene, 1,2,3,5-tetrafluorobenzene, 1,2,4,5-tetrafluorobenzene, pentafluorobenzene, hexafluorobenzene, for example), fluorotoluene (such as 2-fluorotoluene, 3-fluorotoluene, 4-fluorotoluene, 2,3-difluorotoluene, 2,4-difluorotoluene, 2,5-difluorotoluene, 2,6-difluorotoluene, 3,4-difluorotoluene, octafluorotoluene, for example), benzotrifluoride (such as benzotrifluoride, 2-fluorobenzotrifluoride, 3-fluorobenzotrifluoride, 4-fluorobenzotrifluoride, 2-methylbenzotrifluoride, 3-methylbenzotrifluoride, 4-methylbenzotrifluoride, for example), fluoroxylene (such as 3-fluoro-o-xylene, 4-fluoro-o-xylene, 2-fluoro-m-xylene, 5-fluoro-m-xylene, for example), sulfur-containing heterocyclic compound (such as benzothiazole, 2-methylbenzothiazole, tetrathiafulvalene, for example), nitrile compound (such as adiponitrile, succinonitrile, for example), phosphate (such as trimethyl phosphate, triethyl phosphate, for example), carboxylic anhydride (such as acetic anhydride, propionic anhydride, oxalic anhydride, succinic anhydride, maleic anhydride, phthalic anhydride, benzoic anhydride, for example), alcohol (such as methanol, ethanol, n-propyl alcohol, ethylene glycol, diethylene glycol monomethyl ether, for example), and derivatives of these.

The components described above as the solute and the solvent may be used as a trace component (an additive). The additive may include, for example, at least one selected from the group consisting of $LiBF_4$, LiFSI, LiTFSI, LiBOB, LiDFOB, LiDFOP, $LiPO_2F_2$, $FSO_3Li$, LiI, LiBr, HFE, DOX, PC, FEC, and derivatives of these.

4-6-5. Ionic Liquid

The liquid electrolyte may include an ionic liquid. The liquid electrolyte may include, for example, at least one selected from the group consisting of a sulfonium salt, an ammonium salt, a pyridinium salt, a piperidinium salt, a pyrrolidinium salt, a morpholinium salt, a phosphonium salt, an imidazolium salt, and derivatives of these.

4-7. Gelled Electrolyte

Bipolar battery 100 may include a gelled electrolyte. The gelled electrolyte may include a liquid electrolyte and a polymer material. The polymer material may form a polymer matrix. The polymer material may include, for example, at least one selected from the group consisting of PVdF, PVdF-HFP, PAN, PVdF-PAN, polyethylene oxide (PEO), polyethylene glycol (PEG), and derivatives of these.

4-8. Battery Configuration

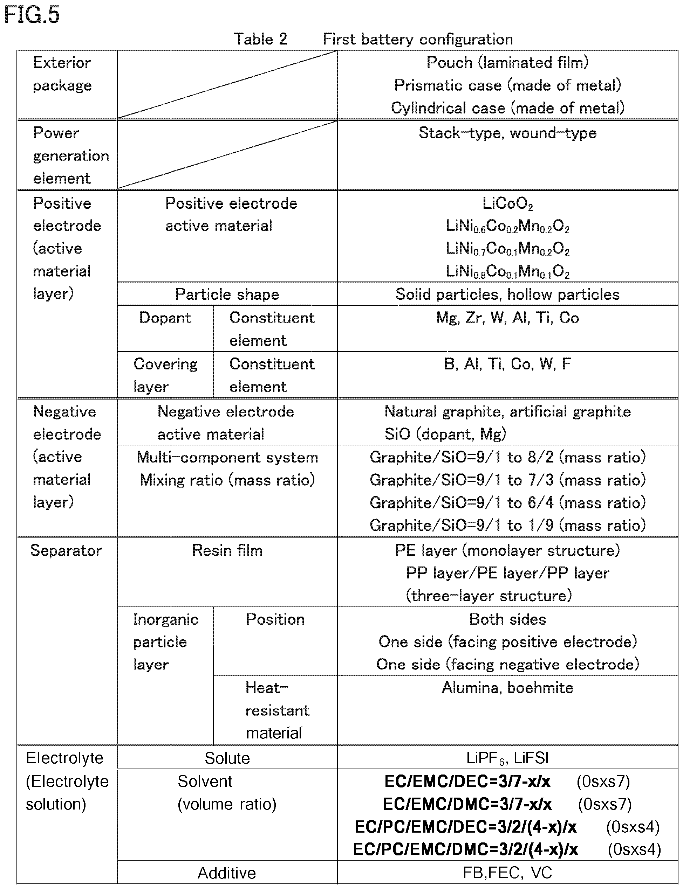

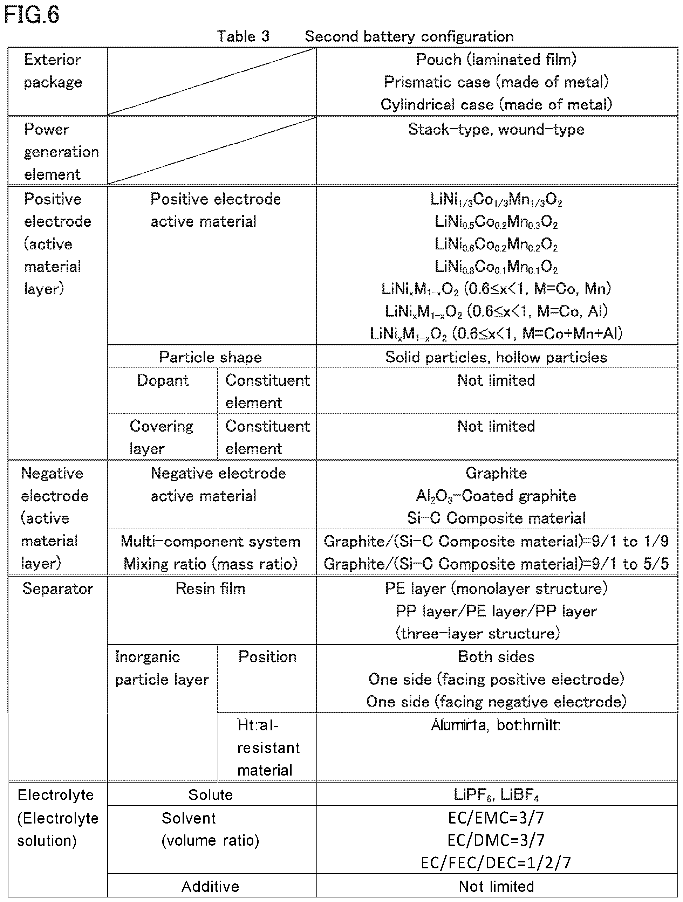

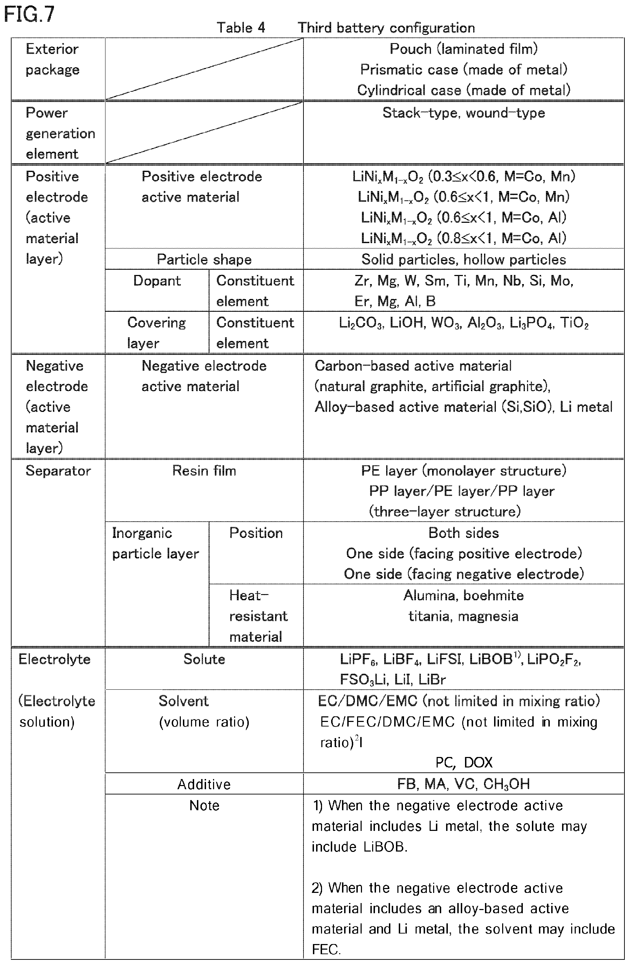

Fig. 5 is Table 2 showing a first battery configuration. Fig. 6 is Table 3 showing a second battery configuration. Fig. 7 is Table 4 showing a third battery configuration. In each table, when a plurality of materials are described in a single cell, this description is intended to mean one of them as well as a combination of them. For example, when materials "$\alpha, \beta, \gamma$" are described in a single cell, this description is intended to mean "at least one selected from the group consisting of $\alpha, \beta$, and $\gamma$". Certain elements may be extracted from the first to third battery configurations and optionally combined together. Bipolar battery 100 may include the first to third battery configurations, for example.

5. All-Solid-State Battery

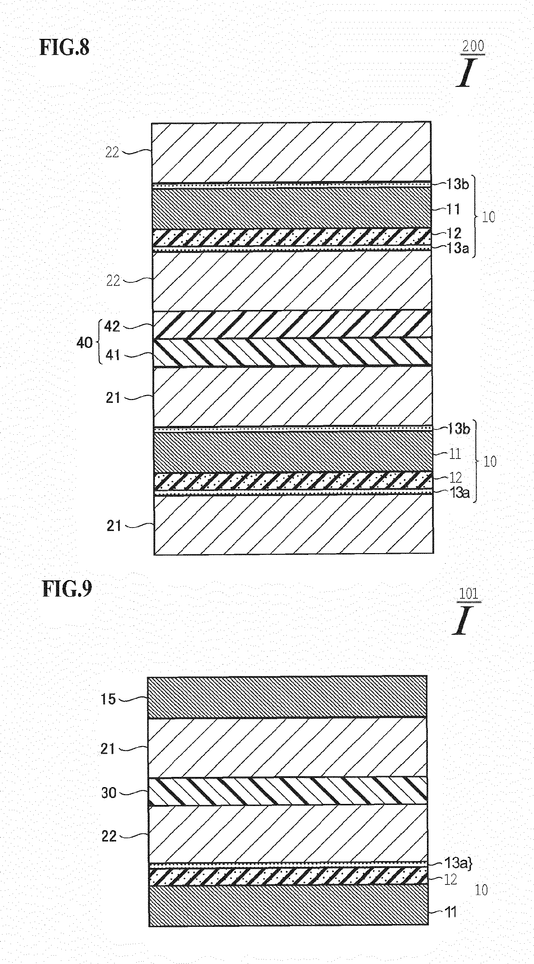

Fig. 8 is a conceptual view illustrating an all-solid-state battery according to the present embodiment. Electrode current collector 10 may be for an all-solid-state battery, for example. An all-solid-state battery 200 may be a bipolar battery, or may be a monopolar battery, for example. All-solid-state battery 200 in Fig. 8 is a monopolar battery. In the monopolar battery, positive electrode active material layer 21 may be placed on both sides of electrode current collector 10. Negative electrode active material layer 22 may be placed on both sides of electrode current collector 10. The electrode active material layer may be placed on only one side of electrode current collector 10.

5-1. Solid Electrolyte

In all-solid-state battery 200, the electrode active material layer includes a solid electrolyte, in addition to an electrode active material, a conductive material, and a binder. The solid electrolyte may form an ion conduction path inside the electrode active material layer. The solid electrolyte may be in particle form, for example. The solid electrolyte may have a D50 from 0.1 to 3 $\mu$m, for example. The D50 of the solid electrolyte may be 1 $\mu$m or less, or 0.5 $\mu$m or less, for example. The amount of the solid electrolyte to be used may be, for example, from 1 to 200 parts by volume, or from 50 to 150 parts by volume, or from 50 to 100 parts by volume, relative to 100 parts by volume of the electrode active material.

### 5-1-1. Sulfide Solid Electrolyte

The electrode active material layer may include a sulfide solid electrolyte, for example. The sulfide solid electrolyte may be glass ceramic, or may be argyrodite, for example. The sulfide solid electrolyte may include, for example, at least one selected from the group consisting of $LiI\text{-}LiBr\text{-}Li_3PS_4$, $Li_2S\text{-}SiS_2$, $LiI\text{-}Li_2S\text{-}SiS_2$, $LiI\text{-}Li_2S\text{-}P_2S_5$, $LiI\text{-}Li_2O\text{-}Li_2S\text{-}P_2S_5$, $LiI\text{-}Li_2S\text{-}P_2O_5$, $LiI\text{-}Li_3PO_4\text{-}P_2S_5$, $Li_2S\text{-}GeS_2\text{-}P_2S_5$, $Li_2S\text{-}P_2S_5$, $Li_{10}GeP_2S_{12}$, $Li_4P_2S_6$, $Li_7P_3S_{11}$, $Li_3PS_4$, $Li_7PS_6$, and $Li_6PS_5X$ (X=Cl, Br, I).

For example, "$LiI\text{-}LiBr\text{-}Li_3PS_4$" refers to a sulfide solid electrolyte produced by mixing $LiI$, $LiBr$, and $Li_3PS_4$ in a freely-selected molar ratio. For example, the sulfide solid electrolyte may be produced by a mechanochemical method. "$Li_2S\text{-}P_2S_5$" includes $Li_3PS_4$. $Li_3PS_4$ may be produced by mixing $Li_2S$ and $P_2S_5$ in "$Li_2S/P_2S_5=75/25$ (molar ratio)", for example.

### 5-1-2. Other Solid Electrolytes

The electrode active material layer may further include other solid electrolytes, in addition to the sulfide solid electrolyte. Hereinafter, for the sake of convenience, the sulfide solid electrolyte is also called "a first solid electrolyte", and another solid electrolyte is also called "a second solid electrolyte". The volume ratio of the first solid electrolyte and the second solid electrolyte may be "(first solid electrolyte)/(second solid electrolyte)=1/99 to 99/1", or "(first solid electrolyte)/(second solid electrolyte)=1/9 to 9/1", or "(first solid electrolyte)/(second solid electrolyte)=3/7 to 7/3", for example. The first solid electrolyte and the second solid electrolyte may have been subjected to composing treatment.

The second solid electrolyte may include, for example, at least one selected from the group consisting of a halide solid electrolyte, an oxide solid electrolyte, a hydride solid electrolyte, and a nitride solid electrolyte.

The halide solid electrolyte may be represented by the following formula (4-1), for example.

$$Li_{6-na}M_aX_6 \ ... \qquad (4\text{-}1)$$

In the above formula, n represents an oxidation number of M. For example, M may include an atom whose oxidation number is +3. For example, M may include an atom whose oxidation number is +4. M may include, for example, at least one selected from the group consisting of Y, Al, Ti, Zr, Ca, and Mg. a may satisfy the relationship of $0<a<2$. X may include, for example, at least one selected from the group consisting of F, Cl, Br, and I.

The halide solid electrolyte may be represented by the following formula (4-2), for example.

$$Li_{3-a}Ti_aAl_{1-a}F_6 \ ... \qquad (4\text{-}2)$$

In the above formula, a may satisfy the relationship of $0\leq a\leq0.1$, $0.1\leq a\leq0.2$, $0.2\leq a\leq0.3$, $0.3\leq a\leq0.4$, $0.4\leq a\leq0.5$, $0.5\leq a\leq0.6$, $0.6\leq a\leq0.7$, $0.7\leq a\leq0.8$, $0.8\leq a\leq0.9$, or $0.9\leq a\leq1$, for example.

The halide solid electrolyte may be represented by the following formula (4-3), for example.

$$Li_3YCl_aBr_bI_{6-a-b} \ ... \qquad (4\text{-}3)$$

In the above formula, the relationship of $0\leq a+b\leq6$ is satisfied. a may satisfy the relationship of $0\leq a\leq1$, $1\leq a\leq2$, $2\leq a\leq3$, $3\leq a\leq4$, $4\leq a\leq5$, or $5\leq a\leq6$, for example. b may satisfy the relationship of $0\leq b\leq1$, $1\leq b\leq2$, $2\leq b\leq3$, $3\leq b\leq4$, $4\leq b\leq5$, or $5\leq b\leq6$, for example.

The oxide solid electrolyte may include, for example, at least one selected from the group consisting of $LiNbO_3$, $Li_{1.5}Al_{0.5}Ge_{1.5}(PO_4)_3$, $La_{2/3-x}Li_{3x}TiO_3$, and $Li_7La_3Zr_2O_{12}$. The hydride solid electrolyte may include $LiBH_4$ and/or the like, for example. The nitride solid electrolyte may include $Li_3N$, $Li_3BN_2$, and/or the like, for example.

### 5-2. Solid Electrolyte Layer

All-solid-state battery 200 includes a solid electrolyte layer 40. Solid electrolyte layer 40 corresponds to a separator. Solid electrolyte layer 40 is interposed between positive electrode active material layer 21 and negative electrode active material layer 22. Solid electrolyte layer 40 separates positive electrode active material layer 21 from negative electrode active material layer 22. Solid electrolyte layer 40 may have a thickness from 1 to 50 $\mu m$, for example.

Solid electrolyte layer 40 includes a solid electrolyte. Solid electrolyte layer 40 may further include a binder, for example. The solid electrolyte of solid electrolyte layer 40 and that of the electrode active material layer may be the same as one another, or may be different from each other. Solid electrolyte layer 40 may include, for example, at least one selected from the group consisting of a sulfide solid electrolyte, a halide solid electrolyte, an oxide solid electrolyte, a hydride solid electrolyte, and a nitride solid electrolyte. The amount of the binder to be used may be, for example, from 0.1 to 10 parts by mass relative to 100 parts by mass of the solid electrolyte. The binder of solid electrolyte layer 40 and that of the electrode active material layer may be the same as one another, or may be different from each other.

Solid electrolyte layer 40 may have a monolayer structure, or may have a multilayer structure. For example, solid electrolyte layer 40 may have a structure of two to five layers. For example, each layer may have a different solid electrolyte. For example, each layer may have a different density. For example, each layer may have a different solid electrolyte particle size (such as D50, for example).

For example, solid electrolyte layer 40 may include a first layer 41 and a second layer 42. First layer 41 is in contact with positive electrode active material layer 21. Second layer 42 is in contact with negative electrode active material layer 22. The ratio of the thickness between first layer 41 and second layer 42 may be "(first layer)/(second layer)=1/9 to 9/1 ", or "(first layer)/(second layer)=3/7 to 7/3", for example.

The composition of first layer 41 may be different from that of second layer 42. For example, it is possible that first layer 41 includes a sulfide solid electrolyte and second layer 42 includes a halide solid electrolyte. For example, it is possible that first layer 41 includes a halide solid electrolyte and second layer 42 includes a sulfide solid electrolyte. First layer 41 may include both a sulfide solid electrolyte and a halide solid electrolyte. Second layer 42 may include both a sulfide solid electrolyte and a halide solid electrolyte. The volume ratio of the halide solid electrolyte to the sulfide solid electrolyte in first layer 41 (a first volume ratio) may be higher than the volume ratio of the halide solid electrolyte to the sulfide solid electrolyte in second layer 42 (a second volume ratio). The first volume ratio may be lower than the second volume ratio.

[Examples]

6. Experiments

6-1. Production of Electrode Current Collector

In the following manner, electrode current collectors according to Nos. 1 to 5 were produced.

No. 1

In a twin-screw extruder/kneader, a resin material (LLDPE) and electrically-conductive particles (AB) were melt-kneaded. The kneading temperature was 200°C. In this manner, a resin composition was formed. The blending ratio (mass ratio) was "(resin material)/(electrically-conductive particles)=77.5/22.5".

In an extruder/laminator, the resulting resin composition was heated to 320°C into a molten form. The resulting molten form was extruded through a T-die to be made into a film, and thereby a resin film was formed. The resulting resin film and a metal foil (an Al foil, with a thickness of 40 $\mu$m) were passed between rolls, and thereby the resin film (an electrically-conductive resin layer) was directly laminated on the metal foil. The electrically-conductive resin layer had a thickness of 10 $\mu$m.

Electrically-conductive carbon particles (AB), a binder (PVdF), and a dispersion medium (NMP) were mixed together to form a coating liquid. In the resulting coating liquid, the solid matter blending ratio (mass ratio) was "(electrically-conductive carbon particles)/binder=90/10". The solid concentration of the coating liquid in a mass fraction was 30%. With an applicator, the coating liquid was applied to the surface of the electrically-conductive resin layer. In this manner, a first carbon particle layer was formed. The coating weight of the resulting first carbon particle layer was 1 mg/cm$^2$. Thus, an electrode current collector was produced.

No. 2

In a twin-screw extruder/kneader, a resin material (LLDPE) and electrically-conductive particles (Ni particles) were melt-kneaded. The kneading temperature was 200°C. In this manner, a resin composition was formed. The blending ratio (mass ratio) was "(resin material)/(electrically-conductive particles)=90/10". Except for these, in the same manner as in No. 1, an electrode current collector was produced.

No. 3

Except that the first carbon particle layer was not formed, in the same manner as in No. 1, an electrode current collector was produced.

No. 4

Except that the first carbon particle layer was not formed, in the same manner as in No. 2, an electrode current collector was produced.

No. 5

An Al foil (thickness, 40 $\mu$m) was bonded to a Cu foil (thickness, 10 $\mu$m) with an electrically-conductive adhesive to produce an electrode current collector (a clad foil). In the resulting electrode current collector according to No. 5, between the Al foil and the Cu foil, an adhesive layer (thickness, 3 $\mu$m) was present. The adhesive layer was formed of the electrically conductive adhesive.

6-2. Evaluation

In a coin cell (a first cell, a second cell, a third cell), the electrode current collector was evaluated. The coin cell had a monopolar structure. By an IV method, the battery resistance of the coin cell was measured.

Fig. 9 is a conceptual view illustrating a first cell. A first cell 101 includes the electrode current collector according to Nos. 1, 2. First cell 101 includes electrode current collector 10, positive electrode active material layer 21, negative electrode active material layer 22, an Al foil 15, and separator 30. Positive electrode active material layer 21 is placed on the surface of Al foil 15. Negative electrode active material layer 22 is placed on the surface of electrode current collector 10 (first carbon particle layer 13a). The components are stacked in such a manner that positive electrode active material layer 21 and negative electrode active material layer 22 face with each other with separator 30 interposed therebetween.

Each of positive electrode active material layer 21 and negative electrode active material layer 22 may be formed by paste application, drying, and compression. The configurations of positive electrode active material layer 21 and negative electrode active material layer 22 are as described below.

Positive electrode active material layer 21

Coating weight: 38 mg/cm$^2$
Density: 3.0 g/cm$^3$
Positive electrode active material: NCM
Conductive material: AB
Binder: PVdF
Blending ratio: "NCM/AB/PVdF=95/2.5/2.5 (mass ratio)"

Negative electrode active material layer 22

Coating weight: 22.6 mg/cm$^2$
Density: 1.2 g/cm$^3$
Negative electrode active material: graphite (covered with amorphous carbon)
Binder: CMC, SBR
Blending ratio: "graphite/CMC/SBR=97/0.7/2.3 (mass ratio)"

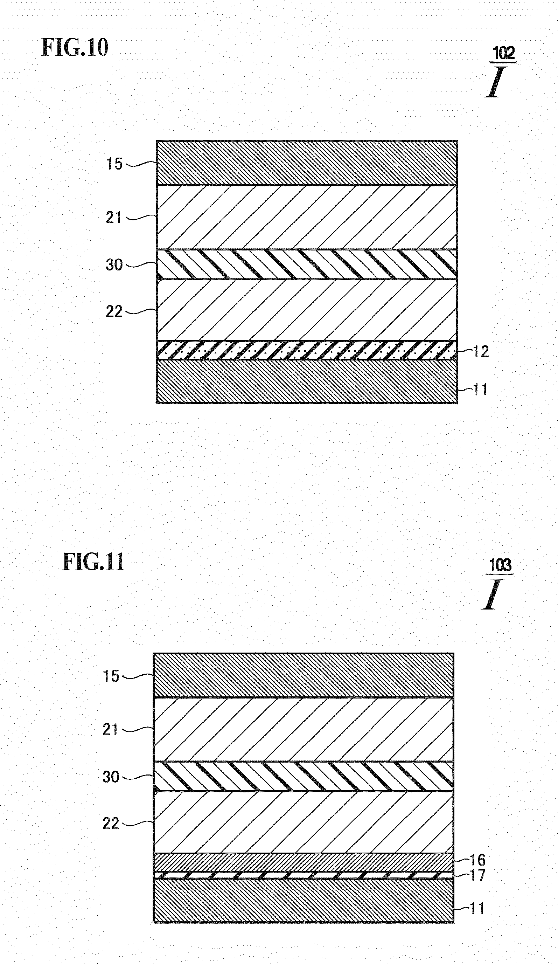

Fig. 10 is a conceptual view illustrating a second cell. A second cell 102 includes the electrode current collector according to Nos. 3, 4. Second cell 102 is distinct from first cell 101 in that the former does not include first carbon particle layer 13a. The other configurations are the same as first cell 101.

Fig. 11 is a conceptual view illustrating a third cell. A third cell 103 includes the electrode current collector according to No. 5. Third cell 103 corresponds to second cell 102 with electrically-conductive resin layer 12 replaced by a Cu foil 16. Further, third cell 103 includes an adhesive layer 17 between Al foil 15 and Cu foil 16.

6-3. Results

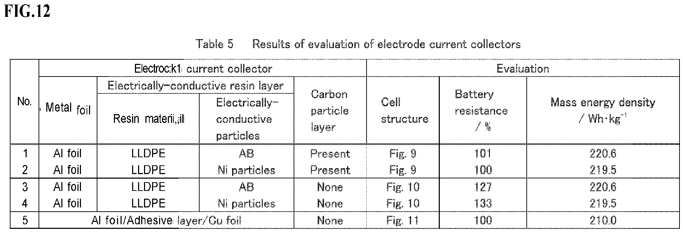

Fig. 12 is Table 5 showing results of evaluation of electrode current collectors. The battery resistance in Table 5 is a relative value. The battery resistance of No. 5 is defined as 100%.

Each of Nos. 1, 2 exhibited a battery resistance that was comparable to No. 5 (a clad foil). Each of Nos. 1, 2 used less metal than No. 5. Each of Nos. 1, 2 had a higher mass energy density than No. 5.

Each of Nos. 3, 4 had a higher battery resistance than Nos. 1, 2. Each of Nos. 1, 2 includes a first carbon particle layer. Nos. 3, 4 do not include a first carbon particle layer. It is conceivable that each of Nos. 3, 4 had significantly nonuniform electrode reaction and thereby had a high battery resistance.

In the first carbon particle layer of No. 1 and the electrically-conductive resin layer of No. 3, current mapping was measured with an SPM. As for No. 1, the standard deviation of current was 0.139 nA. As for No. 3, the standard deviation of current was 1.08 nA.

## Claims

1. An electrode current collector comprising, in the following order:

   a metal foil (11);
   an electrically-conductive resin layer (12); and
   a carbon particle layer (13a), wherein
   the electrically-conductive resin layer (12) includes a contiguous phase and a dispersed phase,

      the contiguous phase includes a resin material,
      the dispersed phase includes electrically-conductive particles, and

   the carbon particle layer (13a) includes electrically-conductive carbon particles.

2. The electrode current collector according to claim 1, wherein

   the metal foil (11) is an aluminum foil, and
   the resin material is an olefin-based resin.

3. The electrode current collector according to claim 1, wherein

   the metal foil (11) has a thickness from 20 to 40 $\mu$m,
   the electrically-conductive resin layer (12) has a thickness from 5 to 20 $\mu$m, and
   the carbon particle layer (13a) has a thickness from 0.5 to 5 $\mu$m.

4. The electrode current collector according to claim 1, wherein

   the electrically-conductive resin layer (12) includes the electrically-conductive particles in a mass fraction from 5 to 30%, with the remainder being made up of the resin material, and
   the carbon particle layer (13a) includes the electrically-conductive carbon particles in a mass fraction of 50% or more.

5. The electrode current collector according to claim 1, wherein the electrically-conductive particles include at least one selected from the group consisting of electrically-conductive carbon particles and metal particles.

6. The electrode current collector according to claim 1, wherein the electrically-conductive particles include at least one selected from the group consisting of acetylene black, furnace black, graphite, vapor grown carbon fibers, carbon nanotubes, carbon nanofibers, carbon nanospheres, nickel particles, tin particles, copper particles, nickel-tin alloy particles, copper-tin alloy particles, and copper-nickel alloy particles.

7. The electrode current collector according to any one of claims 1 to 6, wherein

   results of current mapping of a surface of the carbon particle layer (13a) measured with a scanning probe microscope have a standard deviation of 0.3 nA or less, and
   the results of current mapping are measured in a square measurement region of 80 $\mu$m $\times$ 80 $\mu$m at an applied voltage of 10 V.

8. A bipolar battery comprising the electrode current collector (10) according to claim 1.

9. An all-solid-state battery comprising the electrode current collector (10) according to claim 1.

**10.** A method of producing an electrode current collector, comprising, in the following order:

(a) forming a resin composition by mixing a resin material and electrically-conductive particles;
(b) directly laminating the resin composition in molten form on a metal foil (11) by an extrusion lamination method to form an electrically-conductive resin layer (12); and
(c) forming a carbon particle layer (13a) by applying electrically-conductive carbon particles to the electrically-conductive resin layer (12).

FIG.1

**FIG.2**

Table 1   Results of evaluation of electrically-conductive particles

| Electrically-conductive resin layer | | | | Evaluation |
| --- | --- | --- | --- | --- |
| | Electrically-conductive particles | | Thickness / μm | Volume resistivity / Ω·cm |
| Resin material | Type | Mass fraction / % | | |
| Modified olefin resin | VGCF | 30 | 9 | 4147 |
| Modified olefin resin | VGCF | 34.4 | 10 | 1533 |
| Modified olefin resin | AB | 30 | 5 | 993 |
| Modified olefin resin | AB | 34.4 | 6 | 1141 |
| Modified olefin resin | Ketjenblack | 30 | 8 | 78493 |
| Modified olefin resin | Ni particles (3 to 5 μm) | 10 | 10 | 471 |
| Modified olefin resin | Ni particles (3 to 5 μm) | 30 | 10 | 44 |
| Modified olefin resin | Ni particles (3 to 5 μm) | 69 | 12 | 24 |
| Modified olefin resin | Ni particles (2 to 3 μm) | 10 | 10 | 349 |
| Modified olefin resin | Ni particles (2 to 3 μm) | 30 | 10 | 19 |
| Modified olefin resin | Ni particles (2 to 3 μm) | 69 | 12 | 10 |

**FIG.3**

```
        ┌─────────────────┐
        (     START       )
        └─────────────────┘
                 │
                 ▼              ···-a
        ┌─────────────────────┐
        │ FORM RESIN COMPOSITION │
        └─────────────────────┘
                 │
                 ▼              ···-b
        ┌─────────────────────┐
        │   DIRECT LAMINATION  │
        └─────────────────────┘
                 │
                 ▼               C
        ┌─────────────────────┐
        │    FORM CARBON       │
        │   PARTICLE LAYER     │
        └─────────────────────┘
                 │
                 ▼
        ┌─────────────────┐
        (      END        )
        └─────────────────┘
```

FIG.4

# FIG.5

Table 2    First battery configuration

| | | |
|---|---|---|
| Exterior package | | Pouch (laminated film)<br>Prismatic case (made of metal)<br>Cylindrical case (made of metal) |
| Power generation element | | Stack-type, wound-type |
| Positive electrode (active material layer) | Positive electrode active material | $LiCoO_2$<br>$LiNi_{0.6}Co_{0.2}Mn_{0.2}O_2$<br>$LiNi_{0.7}Co_{0.1}Mn_{0.2}O_2$<br>$LiNi_{0.8}Co_{0.1}Mn_{0.1}O_2$ |
| | Particle shape | Solid particles, hollow particles |
| | Dopant — Constituent element | Mg, Zr, W, Al, Ti, Co |
| | Covering layer — Constituent element | B, Al, Ti, Co, W, F |
| Negative electrode (active material layer) | Negative electrode active material | Natural graphite, artificial graphite<br>SiO (dopant, Mg) |
| | Multi-component system Mixing ratio (mass ratio) | Graphite/SiO=9/1 to 8/2 (mass ratio)<br>Graphite/SiO=9/1 to 7/3 (mass ratio)<br>Graphite/SiO=9/1 to 6/4 (mass ratio)<br>Graphite/SiO=9/1 to 1/9 (mass ratio) |
| Separator | Resin film | PE layer (monolayer structure)<br>PP layer/PE layer/PP layer<br>(three-layer structure) |
| | Inorganic particle layer — Position | Both sides<br>One side (facing positive electrode)<br>One side (facing negative electrode) |
| | Heat-resistant material | Alumina, boehmite |
| Electrolyte (Electrolyte solution) | Solute | $LiPF_6$, LiFSI |
| | Solvent (volume ratio) | **EC/EMC/DEC=3/7-x/x    (0≤x≤7)**<br>**EC/EMC/DMC=3/7-x/x    (0≤x≤7)**<br>**EC/PC/EMC/DEC=3/2/(4-x)/x    (0≤x≤4)**<br>**EC/PC/EMC/DMC=3/2/(4-x)/x    (0≤x≤4)** |
| | Additive | FB, FEC, VC |

# FIG.6

Table 3    Second battery configuration

| Exterior package | | | Pouch (laminated film)<br>Prismatic case (made of metal)<br>Cylindrical case (made of metal) |
|---|---|---|---|
| Power generation element | | | Stack-type, wound-type |
| Positive electrode (active material layer) | Positive electrode active material | | $LiNi_{1/3}Co_{1/3}Mn_{1/3}O_2$<br>$LiNi_{0.5}Co_{0.2}Mn_{0.3}O_2$<br>$LiNi_{0.6}Co_{0.2}Mn_{0.2}O_2$<br>$LiNi_{0.8}Co_{0.1}Mn_{0.1}O_2$<br>$LiNi_xM_{1-x}O_2$ (0.6≤x<1, M=Co, Mn)<br>$LiNi_xM_{1-x}O_2$ (0.6≤x<1, M=Co, Al)<br>$LiNi_xM_{1-x}O_2$ (0.6≤x<1, M=Co+Mn+Al) |
| | Particle shape | | Solid particles, hollow particles |
| | Dopant | Constituent element | Not limited |
| | Covering layer | Constituent element | Not limited |
| Negative electrode (active material layer) | Negative electrode active material | | Graphite<br>$Al_2O_3$-Coated graphite<br>Si-C Composite material |
| | Multi-component system Mixing ratio (mass ratio) | | Graphite/(Si-C Composite material)=9/1 to 1/9<br>Graphite/(Si-C Composite material)=9/1 to 5/5 |
| Separator | Resin film | | PE layer (monolayer structure)<br>PP layer/PE layer/PP layer<br>(three-layer structure) |
| | Inorganic particle layer | Position | Both sides<br>One side (facing positive electrode)<br>One side (facing negative electrode) |
| | | Ht:al-resistant material | Alumina, bot:hrnilt: |
| Electrolyte (Electrolyte solution) | Solute | | $LiPF_6$, $LiBF_4$ |
| | Solvent (volume ratio) | | EC/EMC=3/7<br>EC/DMC=3/7<br>EC/FEC/DEC=1/2/7 |
| | Additive | | Not limited |

## FIG.7

Table 4    Third battery configuration

| Exterior package | | | Pouch (laminated film)<br>Prismatic case (made of metal)<br>Cylindrical case (made of metal) |
|---|---|---|---|
| Power generation element | | | Stack-type, wound-type |
| Positive electrode (active material layer) | Positive electrode active material | | $LiNi_xM_{1-x}O_2$ (0.3≤x<0.6, M=Co, Mn)<br>$LiNi_xM_{1-x}O_2$ (0.6≤x<1, M=Co, Mn)<br>$LiNi_xM_{1-x}O_2$ (0.6≤x<1, M=Co, Al)<br>$LiNi_xM_{1-x}O_2$ (0.8≤x<1, M=Co, Al) |
| | Particle shape | | Solid particles, hollow particles |
| | Dopant | Constituent element | Zr, Mg, W, Sm, Ti, Mn, Nb, Si, Mo, Er, Mg, Al, B |
| | Covering layer | Constituent element | $Li_2CO_3$, LiOH, $WO_3$, $Al_2O_3$, $Li_3PO_4$, $TiO_2$ |
| Negative electrode (active material layer) | Negative electrode active material | | Carbon-based active material (natural graphite, artificial graphite), Alloy-based active material (Si,SiO), Li metal |
| Separator | Resin film | | PE layer (monolayer structure)<br>PP layer/PE layer/PP layer<br>(three-layer structure) |
| | Inorganic particle layer | Position | Both sides<br>One side (facing positive electrode)<br>One side (facing negative electrode) |
| | | Heat-resistant material | Alumina, boehmite<br>titania, magnesia |
| Electrolyte (Electrolyte solution) | Solute | | $LiPF_6$, $LiBF_4$, LiFSI, LiBOB[1], $LiPO_2F_2$, $FSO_3Li$, LiI, LiBr |
| | Solvent (volume ratio) | | EC/DMC/EMC (not limited in mixing ratio)<br>EC/FEC/DMC/EMC (not limited in mixing ratio)[2]<br>PC, DOX |
| | Additive | | FB, MA, VC, $CH_3OH$ |
| | Note | | 1) When the negative electrode active material includes Li metal, the solute may include LiBOB.<br><br>2) When the negative electrode active material includes an alloy-based active material and Li metal, the solvent may include FEC. |

EP 4 391 096 A2

**FIG.8**

**FIG.9**

30

FIG.10

$\underline{102}$
$I$

15
21
30
22
12
11

FIG.11

$\underline{103}$
$I$

15
21
30
22
16
17
11

**FIG.12**

Table 5　Results of evaluation of electrode current collectors

| No. | Electrode current collector | | | | | Evaluation | |
| | Metal foil | Electrically-conductive resin layer | | Carbon particle layer | Cell structure | Battery resistance / % | Mass energy density / Wh·kg$^{-1}$ |
| | | Resin material | Electrically-conductive particles | | | | |
| 1 | Al foil | LLDPE | AB | Present | Fig. 9 | 101 | 220.6 |
| 2 | Al foil | LLDPE | Ni particles | Present | Fig. 9 | 100 | 219.5 |
| 3 | Al foil | LLDPE | AB | None | Fig. 10 | 127 | 220.6 |
| 4 | Al foil | LLDPE | Ni particles | None | Fig. 10 | 133 | 219.5 |
| 5 | Al foil/Adhesive layer/Cu foil | | | None | Fig. 11 | 100 | 210.0 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022202996 A

- JP 2019106282 A